# EUROPÄISCHE PATENTSCHRIFT

(11) **EP 1 952 128 B1**
(45) Veröffentlichungstag und Bekanntmachung des Hinweises auf die Patenterteilung: **10.02.2010**
(21) Anmeldenummer: 06829064.2
(22) Anmeldetag: 16.11.2006
(51) Int. Cl.: G01N 21/55, G01N 21/77, G01N 33/543, G01N 21/27

(54) **VERTEILTE MESS- UND REFERENZSPOTS, INSBESONDERE FÜR CHEMO- UND BIOSENSOREN**
DISTRIBUTED MEASUREMENT SPOTS AND REFERENCE SPOTS, ESPECIALLY FOR CHEMOSENSORS AND BIOSENSORS
SPOTS DE MESURE ET DE REFERENCE REPARTIS, EN PARTICULIER POUR DES CHIMIOCAPTEURS ET DES BIOCAPTEURS

(30) Priorität: 16.11.2005 DE 102005054495
(43) Veröffentlichungstag der Anmeldung: 06.08.2008
(73) Patentinhaber: Mivitec GmbH, 93161 Sinzing (DE)
(72) Erfinder: MIRSKY, Vladimir, 93161 Sinzing (DE); MIRSKY, Alex, 93161 Sinzing (DE)
(74) Vertreter: Jordan, Volker Otto Wilhelm
(86) Internationale Anmeldenummer: PCT/EP2006/011017
(87) Internationale Veröffentlichungsnummer: WO 2007/057195

(56) Entgegenhaltungen:
- WO-A-02/46756
- JP-A- 2004 037 103
- US-A1- 2005 017 191
- DATABASE MEDLINE [Online] US NATIONAL LIBRARY OF MEDICINE (NLM), BETHESDA, MD, US; 15. April 2005 (2005-04-15), ZYBIN ALEXANDER ET AL: "Double-wavelength technique for surface plasmon resonance measurements: basic concept and applications for single sensors and two-dimensional sensor arrays." XP002418022 Database accession no. NLM15828772 in der Anmeldung erwähnt & ANALYTICAL CHEMISTRY 15 APR 2005, Bd. 77, Nr. 8, 15. April 2005 (2005-04-15), Seiten 2393-2399, ISSN: 0003-2700

## Beschreibung

Die Erfindung bezieht sich allgemein auf Messverfahren und Messanordnungen, bei denen wenigstens zwei Arten von Sensorspots verwendet werden, nämlich einerseits Messspots und andererseits Referenz- oder Kalibrierungsspots (im Folgenden in der Regel nur als Referenzspots angesprochen), wobei ein auf Grundlage wenigstens eines Messspots erhaltenes Messsignal auf Basis eines auf Grundlage wenigstens eines Referenz- oder Kalibrierungsspots erhaltenen Referenz- oder Kalibrierungssignals (im Folgenden in der Regeln nur als Referenzsignal angesprochen) weiter ausgewertet wird, insbesondere hinsichtlich gewisser Einflüsse korrigiert oder kalibriert wird oder/und mittels des wenigstens einen Messspots und des wenigstens einen Referenz- oder Kalibrierungsspots eine differentielle Messung durchgeführt wird. Es wird beispielsweise an optisch durchgeführte Oberflächen-Plasmonen-Resonanz-Messungen (Surface Plasmon Resonance, SPR) gedacht.

Zur im Hinblick auf die Implementierung der Erfindungsvorschläge besonders - aber nicht ausschließlich - interessierenden SPR-Messmethode kann zum technischen Hintergrund, dem messtechnischem Instrumentarium und in Frage kommenden Anwendungen beispielsweise verwiesen werden auf: A. Zybin et al., Anal. Chem., 2005, 77, 2393-2399; T. Akimoto et al., Biosensors and Bioelectronics 2003, 18, 1447-1453; A. K. Sharma et al., Optics Communications 2005, 245, 159-169; C. E. H. Berger et al., Sensors and Actuators B 2000, 63, 103-108; H. B. Lu et al., Sensors and Actuators B 2001, 74, 91-99; S. A. Zynio et al., Sensors 2002, 2, 62-70; J. R. Lakowicz, Analytical Biochemistry 2004, 324, 153-169 und N. Nath et al., Anal. Chem. 2002, 74, 504-509. Ferner kann verwiesen werden auf eine differentielle Oberflächen-Plasmonen-Resonanz-Messvorrichtung und ein entsprechendes Messverfahren gemäß EP 1 617 203 A1 (T. Imato et al.).

Einen guten Überblick über die Grundlagen von SPR Sensoren, Arten der Implementierung von SPR Biosensoren und Anwendungen von SPR Biosensoren geben verschiedene Autoren im Fachbuch "Surface Plasmon Resonance Bases Sensors", Springer Series On Chemical Sensors and Biosensors (Ed. O. S. Wolfbeis), Band 04 (Ed. J. Homola), Springer Verlag Berlin Heidelberg 2006.

Eine Übersicht über Entwicklungen und verfolgte Entwicklungsziele bei SPR-Biosensoren gibt Charles T. Campbell in einem unter der URL www.cpac.washington.edu im Internet abrufbaren Artikel mit dem Titel "Surface Plasmon Resonance (SPR) Biosensor Development". In diesem Artikel werden auch differentielle SPR-Messungen im Array-Format vermittels sogenannter SPR-Mikroskopie behandelt, bei denen ein 10x12 Array mit sechzig zur Anbindung von sechzig unterschiedlichen Biopolymeren funktionalisierten Messpots und sechzig Referenzspots zur Substraktion von Hintergrund-Änderungen insbesondere aufgrund unspezifischer Anbindung und Änderungen des Brechungsindexes der Pufferlösungen verwendet wird.

Die Erfindung zielt insbesondere auf eine technische Lösung auf dem Gebiet der analytischen Technologie zur physikalischen, chemischen und biochemischen Analyse. Ein besonders relevanter Anwendungszweck ist beipielsweise die Konzentrationsbestimmung verschiedener Stoffe in gasartigen und flüssigen Umgebungen (vgl. beispielsweise die Klasse G01N 21 der Internationalen Patentklassifikation IPC), die Durchführung biochemischer Analysen und immunologischer Versuche in der Medizin und in der Forschung, in der Biotechnologie, zur Kontrolle der Lebensmittelqualität, landwirtschaftlicher Erzeugnisse und des Trinkwassers, hierunter fällt auch die Bestimmung des Schadstoffgehalts (Pestizide, Insektizide u.a.), sowie zum ökologischen Monitoring der Umwelt. Ferner kann es um die die Untersuchung von Adsorbtionsprozessen, die hochempfindliche Messung der temperaturabhängigen optischen und elektrischen Eigenschaften oder Untersuchung der Veränderung dieser Eigenschaften gehen.

Für die Messung von physikalischen, biologischen, biochemischen oder chemischen Parametern verwendet man derzeit vor allem entweder direkte oder differentielle Messungen. Bei direkter Messung liest man ein Messsignal direkt von einem einzelnen Sensor. Bei der differentiellen Messung misst man das Signal von einem "aktiven" Sensor (weiter als Messspot bezeichnet) und subtrahiert von diesem Messsignal das Signal, welches auf einem inaktiven Sensor (weiter als Referenzspot bezeichnet) gemessen wird. Bei der differentiellen Messung kann man den möglichen Einfluss vieler Störfaktoren und nicht exakt kontrollierbarer Randbedingungen, wie etwa Druck, Reagenzienkonzentration, Temperatur und sonstiger Parameter, verhindern. Die differentielle Messanordnung ist gut bekannt und wird intensiv in der Technik und Wissenschaft eingesetzt. Es sollen hier nur einige Beispiele genannt werden: In physikalischen Sensoren kann man mit differentiellen Messungen den Temperatureinfluss minimieren, in Chemo- und Biosensoren erlaubt die Verwendung differentieller Messung nicht nur die Verminderung des Temperatureinflusses, sondern auch Kompensation unspezifischer Effekte auf der Sensoroberfläche (z. B. Adsorption einer Störsubstanz in Affinitätssensoren, Schwankung des Sauerstoffpartialdrucks in enzymatischen Biosensoren mit Clark-Elektrode). Die Verwendung differentieller Messungen wurde in einer Vielzahl von Quellen, in wissenschaftlichen Publikationen und Patentpublikationen, beschrieben.

Heute ist die Empfindlichkeit von vielen Typen physikalischer und chemischer Sensoren durch Temperaturschwankungen bzw. Schwankungen der Reagenzkonzentrationen oder anderer physikalischer oder chemischer Parameter zwischen Mess- und Referenzspot begrenzt [A. Zybin et al., Anal. Chem., 2005, 77, 2393-2399]. Um diese Effekte zu vermindern, verwendet man in einigen Messgeräten eine hochpräzise Temperaturstabilisierung. In chemischen Sensoren und Biosensoren verwendet man relativ komplizierte und nicht immer zuverlässige Mikrofluidik, um die Temperaturschwankungen nach Zugabe von Reagenzien zu vermindern, so dass möglichst niedriger Temperaturunterschied zwischen zugegebenen Reagenzien und der Sensoroberfläche vorhanden ist. Auch in diesem Fall werden die Temperaturschwankungen nicht vollständig kompensiert, da die Analyt-Wechselwirkung mit dem Messspot als exothermische bzw. endothermische Reaktion stattfinden kann. Zusätzliche Schwierigkeiten, die durch hochpräzise Temperaturstabilisierung und Mikrofluidik nicht kompensiert werden, sind Schwankungen der Reagenzkonzentration neben der Oberfläche oder anderer physikalischer Parameter (etwa Druck, Geschwindigkeit des Reagenzflusses usw.).

Um eine bessere Kompensation von Störfaktoren zu erreichen, sollte man den Messspot und den Referenzspot möglichst nah beieinander platzieren. Hier gibt es aber eine Einschränkung: man kann zwar den Messspot und den Referenzspot fast abstandlos auf einer Oberfläche platzieren, doch die Messsignale, die von einem Mess- bzw. Referenzspot geliefert werden, sind für die meisten Messmethoden integrale Signalen ganzer Messoberflächen. Falls ein Temperaturgradient bzw. ein Reagenzengradient auf der Sensoroberfläche vorhanden ist, was nie völlig vermeidbar ist, werden Signale von Mess- und Referenzspots ungefähr gleich den Signalen in den Mittelpunkten dieser Spots sein. Deshalb wird nicht nur der Abstand zwischen Referenz- und Mess-Spots, sondern auch die Größe dieser Spots ihren minimalen Temperaturunterschied charakterisieren. Eine Verkleinerung des Mess- und Referenzspots ist nur begrenzt möglich, da dies typischerweise zur Verringerung des Signal/Rausch-Verhältnisses führt.

Zur Nomenklatur sei angemerkt, dass die Begriffe "Messspot" und "Sensorspot" häufig - unterscheidend vom zugeordneten Referenzspot - synonym verwendet werden, obwohl zutreffend auch der Referenzspot als Sensorspot, nämlich als Sensorspot anderen Typs als der Messspot, identifiziert werden kann.

WO 02/46756 zeigt eine Sensor-Einrichtung mit wenigstens einer Anordnung von auf oder in einem gemeinsamen Substrat angeordneten oder von einem gemeinsamen Substrat gehaltenen Sensorspots, wobei wenigstens eine erste Gruppe von mehreren Sensorspots der Anordnung als Messspots ausgeführt ist, die auf wenigstens eine zu messende Größe ansprechen und auf deren Grundlage mittels einer Messanordnung wenigstens ein die zu messende Größe oder eine Änderung der zu messenden Größe direkt oder indirekt repräsentierendes Messsignal bereitstellbar ist, wobei wenigstens eine zweite Gruppe von mehreren den Messspots zugeordneten Sensorspots der Anordnung als Referenzspots (siehe zusätzliche Messbereiche, bzw. Referenzierung) ausgeführt ist, die auf die zu messende Größe nicht oder nur unwesentlich ansprechen und auf deren Grundlage mittels der Messanordnung wenigstens eine Referenzsignal bereitstellbar ist. Die Referenzspots sind in Bezug auf die zugeordneten Messspots derart ausgeführt, dass die Referenzspots auf wenigstens eine Randbedingungsgröße ansprechen, auf die auch die Messspots ansprechen und die das wenigstens eine Messsignal beeinflusst, so dass das Referenzsignal die Randbedingungsgröße oder eine Änderung der Randbedingungsgröße direkt oder indirekt repräsentiert. Die Sensorspots sind derart verteilt angeordnet, dass sowohl die Referenzspots als auch die auf die gleiche zu messende Größe ansprechenden Messspots über einen gemeinsamen Anordnungsbereich verteilt sind, so dass bezogen auf wenigstens eine Richtung derartige Messspots zwischen Referenzspots und Referenzspots zwischen derartigen Messspots angeordnet sind.

Die US 2005/0017191 A1 zeigt einen Träger für ein Array von Fluoreszenzmarkierten Proben, mit einem transparenten Körper, welcher eine Trägerfläche und mit Abstand darunter ein Feld von eingebetteten optischen Merkmalen aufweist, die von einem breiten Erregungslichtstrahl beleuchtet werden, der mit einer vorbestimmten Richtung auf den Träger gerichtet ist, sodass auf der Trägeroberfläche einen Oberflächenwelleneffekt erzeugt wird. Das Feld der eingebetteten optischen Merkmale und der Träger sind so angeordnet, dass der auf die Merkmale fallende Lichtstrahl durch den Träger mit einem Winkel zur Trägeroberfläche hindurchgeht, der einen Oberflächenwelleneffekt dieser Strahlung erzeugt, wodurch die markierten Proben in eine Richtung fluoreszieren, die sich von der Beleuchtungsrichtung unterscheidet. Winzige durchlässige und reflektierende Merkmale haben Oberflächen, die allgemein normal zur Strahlungsrichtung sind, im wesentlichen im kritischen Winkel, sowie ein Gitter, dass an einer nicht normalen Oberfläche beleuchtet wird. Ein Datenerfassungssystem, das einen von einem Schrittmotor angetriebenen Untersetzer verwendet, lenkt den breiten Beleuchtungsstrahl durch eine Serie von kleinen Winkelveränderungen. Bei jeder Winkelveränderung wird von einer CCD Kamera ein Bild aufgenommen, und basierend auf den Energiereferenzen auf der Array-Trägeroberfläche wird ein Bild erzeugt, dass auf den Antworten der Energiereferenzen beruht, die lokalisierten Bereichen jedes Bildes zugeordnet sind.

Die JP 2004 037103 A zeigt ein Verfahren zum Messen des Tropfverhaltens einer Vorrichtung, wobei eine Lösung, die eine bestimmte Substanzkombination enthält, zur Bildung von Spots auf einen Membranfilter tropft. Hierbei wird eine Messlösung, die bestimmte Materialeigenschaften hat und eine Markierungssubstanz enthält, auf eine Absorptionsfläche des Membranfilters getropft, und eine Lösung mit der gleichen Zusammensetzung wird auf eine andere Absorptionsfläche des Membranfilters getropft, und dann werden die beiden Tropfen auf dem Membranfilter miteinander verglichen und die resultierenden Größen ausgewertet, um das Tropfverhalten zu bestimmen.

Der Erfindung liegt die Aufgabe zugrunde, die Probleme des Stands der Technik zu vermeiden oder zumindest deutlich zu reduzieren, ohne dass unbedingt ein großer apparativer Aufwand zu treiben ist.

Zur Lösung dieser Aufgabe wird erfindungsgemäß eine Plasmonenresonanz-Sensor-Einrichtung gemäß Anspruch 1 und ein entsprechendes Verfahren gemäß Anspruch 28 vorgeschlagen. Die Sensor-Einrichtun, umfasst wenigstens eine Anordnung von auf oder in einem gemeinsamen Substrat angeordneten oder von einem gemeinsamen Substrat gehaltenen Sensorspots, wobei wenigstens eine erste Gruppe von mehreren Sensorspots der Anordnung als Messspots ausgeführt ist, die auf wenigstens eine zu messende Größe ansprechen und auf deren Grundlage mittels einer Messanordnung wenigstens ein die zu messende Größe oder eine Änderung der zu messenden Größe direkt oder indirekt repräsentierendes Messsignal bereitstellbar ist, und wenigstens eine zweite Gruppe von mehreren Sensorspots der Anordnung als Referenzspots ausgeführt ist, die auf die zu messende Größe nicht oder nur unwesentlich ansprechen und auf deren Grundlage mittels der Messanordnung wenigstens ein Referenzsignal bereitstellbar ist, wobei die Referenzspots in Bezug auf die zugeordneten Messspots derart ausgeführt sind, dass die Referenzspots auf wenigstens eine Randbedingungsgröße ansprechen, auf die auch die Messspots ansprechen und die das wenigstens eine Messsignal beeinflusst, so dass das Referenzsignal die Randbedingungsgröße oder eine Änderung der Randbedingungsgröße direkt oder indirekt repräsentiert, wobei die Sensorspots derart verteilt angeordnet sind, dass sowohl die Referenzspots als auch die auf die gleiche zu messende Größe ansprechenden Messspots über einen gemeinsamen Anordnungsbereich verteilt sind, so dass bezogen auf wenigstens eine Richtung derartige Messspots zwischen Referenzspots und Referenzspots zwischen derartigen Messspots angeordnet sind.

Die erfindungsgemäße Lösung, die treffend als "verteilte Referenzierung" oder "distributed reference" (oder Sensoren mit verteilten Mess- und Referenzspots) angesprochen werden kann, basiert auf der folgenden Idee: statt bekannter Mess-Anordnungen aus einem (oder mehreren) Messspot und einem Referenzspot verwendet man mehrere kleine Mess- und Referenzspots, die auf der Messanordnung verteilt sind/werden. Das gesamte Referenzsignal wird aus sämtlichen oder zumindest mehreren ausgewählten Referenzspots gemessen. Auch das die eigentliche Messinformation enthaltene Messsignal wird aus sämtlichen oder zumindest mehreren ausgewählten Messspots gemessen. Das resultierende Ausgangssignal der Anordnung etwa für chemisches oder physikalisches Sensing wird auf Grundlage des Messsignals und des Referenzsignals erhalten, beispielsweise durch vorzugsweise programmgesteuerte mathematische Bearbeitung dieser Signale (typischerweise durch Subtraktion, also Differenzbildung, oder Division, also Verhältnisbildung, ggf. unter Durchführung einer Nominierung).

Die Gesamtoberfläche sämtlicher in die Messung einbezogenen Referenzspots und sämtlicher in die Messung einbezogenen Messspots kann groß genug bleiben, um eine negative Wirkung auf das Signal-zu-Rauschen-Verhältnis (Signal/Rausch-Verhältnis) zu vermeiden. Die einzelnen Spots sind aber wesentlich kleiner als herkömmlich verwendete Spots. Weil der mittlere Abstand durch die Größe einzelner Spots definiert wird und damit - nach der Erfindung - sehr klein sein kann, kann nach der Erfindung ohne Verluste im Signal Signal-zu-Rauschen-Verhältnis eine sehr gute Kompensation von Schwankungen oder Änderungen physikalischer und chemischer Größen bzw. Randbedingungen erhalten werde, wie mit dem herkömmlichen Ansatz entsprechenden bzw. von diesem ausgehend denkbaren Sensoren, die insgesamt eine so kleine Oberfläche wie einzelne erfindungsgemäße Mess- und Referenz-Spots haben, die aber ein wesentlich schlechteres Signal-zu-Rauschen-Verhältnis ergeben oder aufgrund zu kleinen Signal-zu-Rauschen-Verhältnisses unter Umständen sogar überhaupt keine auswertbaren Messergebnisse liefern.

Nach der Erfindung wird die Verwendung verteilter Mess- und Referenzspots in physikalischen, chemischen und biologischen Sensoren, die auf ortsaufgelösten Messungen basieren, vorgeschlagen, und es werden entsprechende Sensoren bereitgestellt. Durch die "verteilte Referenzierung können insbesondere Temperatureinflüsse, Temperaturfluktuationen sowie ungleichmäßige Verteilungen von Reagenzien bei den Messungen sowie andere schwer kontrollierbare Störgrößen und Randbedingungen ausgeglichen werden, was zur Verbesserung des Signal-zu-Rauschen-Verhältnisses und Signal-zu-Signaldrift-Verhältnisses führt.

Ferner wird vorgeschlagen, dass bezogen auf die wenigstens eine Richtung für eine Mehrzahl von auf die gleiche zu messende Größe ansprechenden Messspots und eine Mehrzahl von Referenzspots oder - vorzugsweise - für alle Messspots oder/und alle Referenzspots wenigstens eine der folgenden Anordnungsvorschriften erfüllt ist:
i) bezogen auf die wenigstens eine Richtung sind die Messspots und die zugeordneten Referenzspots derart gegeneinander versetzt angeordnet, dass ein jeweiliger Messspot zwischen zwei unmittelbar benachbarten Referenzspots angeordnet ist;
ii) bezogen auf die wenigstens eine Richtung sind die Messspots und die zugeordneten Referenzspots derart gegeneinander versetzt angeordnet, dass ein jeweiliger Referenzspot zwischen zwei unmittelbar benachbarten Messspots angeordnet ist.

Ferner sind die Sensorspots derart verteilt angeordnet, dass bezogen auf wenigstens eine weitere Richtung auf die gleiche zu messende Größe ansprechende Messspots zwischen zugeordneten Referenzspots und Referenzspots zwischen zugeordneten, auf die gleiche Größe ansprechenden Messspots angeordnet sind. In der Regel wird es aber ausreichen oder sogar zweckmäßiger sein, wenn die Sensorspots in Bezug auf eine weitere Richtung ausgedehnt ausgeführt sind und sich in dieser weiteren Richtung auf die gleiche Größe ansprechende Messspots und zugeordnete Referenzspots nebeneinander erstrecken und gewünschtenfalls nicht gegeneinander versetzt sind.

Weiterbildend wird vorgeschlagen, dass die Gruppe von Messspots wenigstens vier, vorzugsweise wenigstens acht, höchstvorzugsweise wenigstens zwölf, noch stärker bevorzugt wenigstens zwanzig Messpots umfasst, die auf die gleiche Größe ansprechen und mit den zugeordneten Referenzspots über den gemeinsamen Anordnungsbereich verteilt sind, so dass bezogen auf die wenigstens eine Richtung derartige Messspots zwischen Referenzspots und Referenzspots zwischen derartigen Messspots angeordnet sind. Ferner wird vorgeschlagen, das die Gruppe von Referenzspots wenigstens vier, vorzugsweise wenigstens acht, höchstvorzugsweise wenigstens zwölf, noch stärker bevorzugt wenigstens zwanzig Referenzspots umfasst, die mit den auf die gleiche zu messende Größe ansprechenden Messspots über den gemeinsamen Anordnungsbereich verteilt sind, so dass bezogen auf die wenigstens eine Richtung derartige Messspots zwischen Referenzspots und Referenzspots zwischen derartigen Messspots angeordnet sind.

Man kann vorteilhaft vorsehen, dass bezogen auf die wenigstens eine Richtung für eine Mehrzahl von auf die gleiche zu messende Größe ansprechende Messspots - vorzugsweise wenigstens vier, höchstvorzugsweise wenigstens acht, stärker bevorzugt wenigstens zwölf, noch stärker bevorzugt wenigstens zwanzig derartige Messspots - und für eine Mehrzahl von zugeordneten Referenzspots -vorzugsweise wenigstens vier, höchstvorzugsweise wenigstens acht, stärker bevorzugt wenigstens zwölf, noch stärker bevorzugt wenigstens zwanzig Referenzspots - einander unmittelbar benachbarte Messspot und Referenzspots einen Abstand von maximal. 3000 µm, vorzugsweise einen Abstand von maximal 300 µm, höchstvorzugsweise einen Abstand von maximal 30 µm, stärker bevorzugt einen Abstand von maximal 10 µm aufweisen oder - noch stärker bevorzugt - bei verschwindendem oder nahezu verschwindendem Abstand aneinander angrenzen.

Um unterschiedliche Größen chemischer, biologischer, biochemischer oder physikalischer Natur auf Basis einer erfindungsgemäßen Sensor-Einrichtung messen zu können, wird vorgeschlagen, dass mehrere erste Gruppen von Sensorspots der Anordnung jeweils als Messspots ausgeführt ist, wobei die Messspots einer Gruppe jeweils auf die oder wenigstens eine gleiche zu messende Größe ansprechen und die Messspots mehrerer unterschiedlicher Gruppen auf verschiedene zu messende Größen ansprechen. In diesem Zusammenhang kommt es in Betracht, dass den Gruppen von Messspots gemeinsam eine zweite Gruppe von Sensorspots der Anordnung zugeordnet ist, die als Referenzspots ausgeführt sind, und dass die Messspots der Gruppen von Messspots und die Referenzspots der Gruppe Referenzspots über einen gemeinsamen Anordnungsbereich verteilt sind. Demgegenüber ist es aber bevorzugt, dass jeder Gruppe von Messspots eine eigene zweite Gruppe von Sensorspots der Anordnung zugeordnet ist, die als Referenzspots ausgeführt sind, und dass für jede Gruppe von Messspots und die zugeordnete Gruppe von Referenzspots jeweils ein eigener gemeinsamer Anordnungsbereich vorgesehen ist, über den die Messspots der Gruppe von Messspots und die Referenzspots der zugeordneten Gruppe von Referenzspots verteilt sind und der gegenüber dem oder den gemeinsamen Anordnungsbereichen anderer Gruppen von Mess- und Referenzspots versetzt ist.

Weiterbildend wird zur letzteren Ausgestaltungsmöglichkeit vorgeschlagen, dass die Messspots jeder Gruppe von Messspots und die Referenzspots der diesen zugeordneten Gruppe von Referenzspots jeweils derart über den jeweiligen gemeinsamen Anordnungsbereich verteilt sind, dass bezogen auf wenigstens eine Richtung die Messspots zwischen Referenzspots und Referenzspots zwischen Messspots angeordnet sind. Dabei können die Messspots jeder Gruppe von Messspots und die Referenzspots der diesen zugeordneten Gruppe von Referenzspots jeweils entsprechend den vorstehend behandelten Erfindungs- und Weiterbildungsvorschlägen im jeweiligen gemeinsamen Anordnungsbereich angeordnet sein.

Vorteilhaft kann die Sensor-Einrichtung wenigstens vier, vorzugsweise wenigstens acht, höchstvorzugsweise wenigstens zwölf, noch stärker bevorzugt wenigstens zwanzig verschiedene Gruppen von Messspots aufweisen.

Nach einer in der Praxis besonders relevanten Ausgestaltungsform ist vorgesehen, dass die Sensorspots (Mess- und Referenzspots) oder eine Mehrzahl von den Sensorspots auf einer vorzugsweise planen Oberfläche verteilt angeordnet sind und vorzugsweise wenigstens ein einem gemeinsamen Anordnungsbereich entsprechendes zwei-dimensionales Feld von Sensorspots bilden. Dabei können die auf der Oberfläche angeordneten Sensorspots flächig ausgeführt sein.

Nach einer anderen Ausgestaltungsform ist vorgesehen, dass die Sensorspots (Mess- und Referenzspots) oder eine Mehrzahl von den Sensorspots in einem Volumen verteilt angeordnet ist und vorzugsweise wenigstens ein einem gemeinsamen Anordnungsbereich entsprechendes drei-dimensionales Feld von Sensorspots bilden.

Insbesondere für chemische, biologische und biochemische Messanwendungen wird für die erfindungsgemäße Sensor-Einrichtung weiterbildend vorgeschlagen, dass die Messspots der bzw. einer jeweiligen Gruppe dafür funktionalisiert sind, dass wenigstens ein bestimmtes Molekül oder wenigstens ein Molekül einer bestimmten Gruppe von Molekülen daran anbindet und dass das Messsignal die Anbindung wenigstens eines solchen Moleküls an einem jeweiligen Messspott oder die Menge oder ein eingenommenes Volumen von solchen an einem jeweiligen Messspot angebundenen Molekülen als zu messende Größe repräsentiert. Ferner wird insbesondere für biologische und biochemische Messanwendungen für die erfindungsgemäße Sensor-Einrichtung weiterbildend vorgeschlagen, dass die Messspots der bzw. einer jeweiligen Gruppe dafür funktionalisiert sind, dass wenigstens ein bestimmtes biologisches Objekt oder Objektfragment oder wenigstens ein biologisches Objekt oder Objektfragment einer bestimmten Gruppe von biologischen Objekten oder Objektfragmenten daran anbindet und dass das Messsignal die Anbindung wenigstens eines solchen Objekts bzw. Objektfragments an einem jeweiligen Messspott oder die Menge oder ein eingenommenes Volumen von solchen an einem jeweiligen Messspot angebundenen Objekten bzw. Objektfragmenten als zu messende Größe repräsentiert.

Es wird beispielsweise daran gedacht, DNA, Antikörper, Prionen, Bakterien, Viren und sonstige in den Biowissenschaften, der Biochemie und der Biotechnologie relevante Objekte und Objektfragmente bzw. Moleküle zu detektieren, ohne eine vollständige Aufzählung geben zu wollen. Die Erfindung ist insoweit nicht auf spezielle Anwendungen und spezielle zu messende Größen beschränkt. Es wird in diesem Zusammenhang auch auf die eingangs zitierte Fachliteratur verwiesen, die entsprechende Funktionalisierungen exemplarisch zeigt, sowie auf weitere Beispiele, die im Folgenden erwähnt sind.

Es wird vor allem, aber nicht ausschließlich, daran gedacht, dass in dem Substrat auf vorzugsweise optischem Wege eine Plasmonen-Resonanz, insbesondere Oberflächenplasmonen-Resonanz anregbar ist und dass das Messsignal und das Referenzsignal von der Anregung oder Nicht-Anregung einer Plasmonen- bzw. Oberflächenplasmonenresonanz oder von der Wechselwirkung der angeregten Plasmonen- bzw. Oberflächenplasmonen mit der Umgebung im Bereich eines jeweiligen Messspots bzw. Referenzspots abhängt. Auch andere Messprinzipien kommen aber in Betracht.

Die angesprochene Messanordnung kann eine gegenüber der erfindungsgemäßen Sensor-Einrichtung gesonderte Messanordnung sein. Vorzugsweise umfasst die erfindungsgemäße Sensor-Einrichtung aber die Messanordnung zur Bereitstellung der Mess- und Referenzsignale.

Die angesprochenen Mess- und Referenzsignale werden vorzugsweise auf Grundlage einer optischen oder/und elektrischen Wechselwirkung mit den Sensorspots (Mess- und Referenzspots) durch die Messanordnung bereitgestellt bzw. sind durch die Messanordnung bereitstellbar. Weiterbildend wird vorgeschlagen, dass die Messanordnung dafür ausgeführt ist, optische Signale zu erfassen, die eine optische Wechselwirkung zwischen zugeführter elektromagnetischer Strahlung und den Sensorspots oder/und deren Umgebung oder eine Änderung der optischen Wechselwirkung repräsentieren, und die Wechselwirkung bzw. Änderung der Wechselwirkung repräsentierende elektrische Signale oder digitale Daten bereitzustellen. Hierfür kann die Messanordnung eine Bildabfassungseinrichtung, vorzugsweise eine CCD- oder CMOS-Kamera, oder ein Detektorfeld oder Detektorarray (z.B. Photodiodenfeld oder -array) zur Erfassung der optischen Signale umfassen.

Nach einer besonders bevorzugten Ausführungsmöglichkeit ist vorgesehen, dass die Messanordnung dafür ausgeführt ist, für die Messspots und die Referenzspots individuelle Messsignale bzw. Referenzsignale bereitzustellen. Es soll aber nicht ausgeschlossen werden, dass die Messanordnung für alle in eine Messung einbezogene Messspots und für alle in einer Messung einbezogene Referenzspots nur ein summarisches Messsignal bzw. Referenzsignal bereitstellt und ggf. auch nur summarische (beispielsweise optische) Ursprungssignale erfasst, also keine in Bezug auf die einzelnen Spots aufgelöste Messung durchführen kann. Eine bezogen auf die einzelnen Spots aufgelöste bzw. auflösbare Messung ist demgegenüber aber deutlich bevorzugt.

Weiterbildend wird für die erfindungsgemäße Sensor-Einrichtung vorgeschlagen, dass die Messanordnung oder/und eine dieser zugeordnete Auswerteanordnung dafür ausgeführt ist, individuelle Messsignale und individuelle Referenzsignale oder hieraus erhaltene Folgesignale oder Folgedaten zu Kombinationssignalen bzw. Kombinationsfolgesignalen bzw. Kombinationsfolgedaten zu kombinieren, vorzugsweise zu summarischen oder mittleren Mess- und Referenzsignalen bzw. Mess- und Referenzfolgesignalen bzw. Mess- und Referenzfolgedaten zu kombinieren. In diesem Zusammenhang wird weiter vorgeschlagen, dass die Messanordnung oder/und eine dieser zugeordnete Auswerteanordnung dafür ausgeführt ist, die gegebenenfalls normierten Mess- und Referenzkombinationssignale bzw. Mess- und Referenzkombinationsfolgesignale bzw. Mess- und Referenzkombinationsfolgedaten zu verknüpfen oder wenigstens einer Operation zu unterziehen, um Informationen über die zu messende Größe oder deren Änderung zu erhalten. Es wird in diesem Zusammenhang vor allem daran gedacht, dass die Messanordnung oder/und eine dieser zugeordnete Auswerteanordnung dafür ausgeführt ist, Differenzen oder Verhältnisse zwischen den gegebenenfalls normierten Mess- und Referenzkombinationssignalen bzw. Mess- und Referenzkombinationsfolgesignalen bzw. Mess- und Referenzkombinationsfolgedaten zu bilden, um Informationen über die zu messende Größe oder deren Änderung zu erhalten.

Mit der Erfindung bereitgestellt wird insbesondere auch eine Sensor-Einrichtung, die als Oberflächenplasmonenresonanz-Messeinrichtung ausgeführt ist. Ferner wird nach der Erfindung insbesondere auch bereitgestellt eine Sensor-Einrichtung, die als Chemo- oder Biosensor-Einrichtung ausgeführt ist.

Die Erfindung ist aber nicht auf spezielle Messverfahren und Messanwendungen beschränkt. Beispielsweise kann die Sensor-Einrichtung als Ellipsometrie-Messeinrichtung, Interferometrie-Messeinrichtung, Fluorometrie-Messeinrichtung, Absorbanz-Messeinrichtung, Reflexions-Messeinrichtung, Streuungs-Messeinrichtung, akustische Messeinrichtung, Resonanzfrequenz-Messeinrichtung, Kantilever-Messeinrichtung, Impedanz-Messeinrichtung oder elektrochemische Messeinrichtung ausgeführt sein, um einige Beispiele zu geben. Weitere Beispiele sind im Folgenden erwähnt.

Betreffend die Randbedingungsgröße wird unter anderem daran gedacht, dass diese Größe eine Größe aus der Gruppe Temperatur, Druck, Brechungsindex, Konzentration, Dichte und elektrisches Potential ist. Betreffend die vorstehend angesprochenen verschiedenen alternativen Ausgestaltungen der Sensor-Einrichtung sind für den Fachmann jeweilige, die Messung beeinflussende Randbedingungen, für die eine verteilte Referenzierung in Betracht kommt, offensichtlich.

Es kommt in Betracht, dass die Sensor-Einrichtung mittels eines Sensor-Felds, insbesondere Sensor-Arrays, gleichzeitig eine größere Anzahl von Analyten misst, ohne dass eine verteilte Referenzierung mittels Referenzspots erfolgt. Für eine solche Messsituation können Referenzspots einerseits als Messspots dienen und zugleich - andererseits - in kleinerem oder größerem Umfang als Referenzspots für andere Analyten bzw. andere zu messende Größen dienen. Es wird diesbezüglich allgemein vorgeschlagen, dass als Referenzspots dienende, ggf. hierfür funktionalisierte Sensorspots in Bezug auf wenigstens eine andere zu messende Größe als Messspots dienen, insbesondere hierfür funktionalisiert sind. Ferner wird in diesem Zusammenhang daran gedacht, dass als Messspot dienende, insbesondere hierfür funktionalisierte Sensorspots in Bezug auf wenigstens eine andere zu messende Größe als Referenzspots dienen, ggf. hierfür funktionalisiert sind.

Im Falle einer Messung ohne verteilte Referenzierung kann die Signalverarbeitung durch in der Regel aufwändigere Methoden erfolgen, z.B. mittels multi-parametrischer Statistik (beispielsweise Hauptkomponenten-Analyse) mittels neuronaler Netze oder anderer Algorithmen der künstlichen Intelligenz, sowie sonstiger, an sich bekannter Methoden für solche Messsituationen. Die Auswerteanordnung der erfindungsgemäßen Messanordnung kann hierfür ausgelegt oder programmiert sein.

Die Erfindung stellt ferner allgemein bereit eine Vorrichtung für Sensor- oder Transducer-Anwendungen, insbesondere für Chemo- und Biossensor-Anwendungen, umfassend eine oder bestehend aus einer Sensorspot- oder Transducerspot-Anordnung, welche mindestens zwei Spots vom Typ A, im folgenden "Spots A" genannt, und mindestens zwei Spots vom Typ B, im folgenden "Spots B" genannt, aufweist, wobei A eine beliebige bestimmte Ausbildung, insbesondere Beschichtung und Aufbau, der Spots A bezeichnet und B eine beliebige bestimmte Ausbildung, insbesondere Beschichtung und Aufbau, der Spots B bezeichnet. Erfindungsgemäß ist vorgesehen, dass die Spots A und B auf einer Oberfläche oder/und in einem Volumen verteilt sind und elektrische oder/und optische Signale von den Spots A und den Spots B messbar sind. Die erfindungsgemäße Vorrichtung kann ein Gerät zur Messung der elektrischen oder/und optischen Signale umfassen.

Für die Vorrichtung wird weiterbildend vorgeschlagen, dass die Spots A mehrere Gruppen von Spots unterschiedlichen Untertyps Aₓ umfassen, wobei Aₓ eine bestimmte beliebige Ausbildung, insbesondere Beschichtung und Aufbau, der Spots des betreffenden Untertyps Aₓ, im Folgenden Spots Aₓ genannt, bezeichnet.

Die Spots vom Typ A bzw. eines Untertyps Aₓ können als Messspots und die Spots vom Typ B können als Referenzspots dienen.

Die erfindungsgemäße Vorrichtung kann eine erfindungsgemäße Sensor-Einrichtung wie vorstehend definiert und hinsichtlich Weiterbildungen beschrieben umfassen oder von einer solchen gebildet sein. Dabei können die Referenzspots als Spots vom Typ B zu identifizieren sein und können die Messspots als Spots vom Typ A bzw. die Messspots einer bestimmten Gruppe von Messspots als Spots vom Untertyp von Aₓ zu identifizieren sein.

Die erfindungsgemäße Vorrichtung für Sensor- oder Transducer-Anwendungen wird im Folgenden kurz auch als .Sensor-Vorrichtung" oder nur als "Vorrichtung" angesprochen.

Hier umfasst die Sensoreinrichtung zur Verwendung bei Chemo- und Biosensor-Anwendungen mindestens zwei Spots mit Beschichtung und Aufbau vom Typ *A* (wobei *A* eine beliebige Beschichtung und Aufbau bezeichnet, weiter als "Spots *A*" bezeichnet) und mindestens zwei Spots mit Beschichtung und Aufbau vom Typ *B* (wobei *B* eine beliebige Beschichtung und Aufbau bezeichnet, weiter als "Spots B" bezeichnet), wobei die Spots A und B auf der Oberfläche oder/und in einem Volumen verteilt sind. Die Vorrichtung kann ein Gerät oder eine Anordnung zur Messung elektrischer und/oder optischer Signale von einzelnen Spot-Typen (Typ A oder Typ B) umfassen oder dafür vorgesehen ein, mit einem solchen Gerät oder einer solchen Anordnung zusammenzuwirken. Bei den Spots A handelt es sich vorzugsweise um Messspots im oben erläuterten Sinne und bei den Spots B handelt es sich vorzugsweise um Referenz- oder Kalibrierungsspots im oben erläuterten Sinne. Es ist auch denkbar, dass die Vorrichtung mehrere Gruppen von Spots des Typs A aufweist, wobei jede Gruppe mindestens zwei Spots mit Beschichtung und Aufbau von einem Untertyp A*ₓ*, (wobei A*ₓ* eine beliebige Beschichtung und Aufbau bezeichnet) umfasst.

Vorzugsweise weist die Sensor-Vorrichtung mindestens acht Spots mit Beschichtung und Aufbau vom Typ A und mindestens acht Spots mit Beschichtung und Aufbau vom Typ B auf.

Bereitgestellt nach der Erfindung wird ferner eine Anordnung aus *n* derartigen Sensor-Vorrichtungen, wobei *n* zwischen 2 und 10000000, insbesondere zwischen 4 und 400 liegt. Spots A in den einzelnen Vorrichtungen können gleich oder unterschiedlich beschichtet und/oder aufgebaut sein (A*₁*, A*₂*, ... A*ₙ*), wobei die Spots B in allen Vorrichtungen vorzugsweise dieselbe Beschichtung und denselben Aufbau haben.

Der Abstand zwischen unmittelbar benachbarten (nebenstehenden) Spots kann zweckmäßig zwischen 0 und 3000 µm, insbesondere zwischen 0 und 10 µm liegen, wobei der Abstand 0 bedeutet, dass ein jeweiliger Spot A und eine jeweiliger Spot B aneinander angrenzen.

Vorzugsweise befinden sich die Spots *A* und *B* auf einer flachen Oberfläche und sind dabei bevorzugt flächig ausgeführt. Alternativ kann vorgesehen sein, dass die Spots *A* und *B* nicht auf einer Oberfläche, sondern in einem Volumen verteilt sind.

Es wird vor allem - aber nicht ausschließlich - daran gedacht, dass die zu messenden Signale der einzelnen Spots oder - ebenfalls im Prinzip möglich - die aus den Signalbeiträgen mehrerer Spots zu messenden resultierenden Signale optische Signale sind. Es können die optischen Signale von einzelnen Spots beispielsweise mit einer Vorrichtung für die Aufnahme von optischen Bildern (bevorzüglich CCD-Kamera oder CMOS-Kamera) gemessen werden.

Die erfindungsgemäße Vorrichtung kann zusätzlich eine Messanordnung für die Erzeugung und Messung von Oberflächenplasmonenresonanz umfassen oder dafür ausgeführt sein, mit einer solchen zusammen zu wirken.

Ferner kann die erfindungsgemäße Vorrichtung zusätzlich eine Messanordnung für ellipsometrische Messungen umassen oder dafür ausgeführt sein, mit einer solchen zusammen zu wirken.

Ferner kann die erfindungsgemäße Vorrichtung zusätzlich eine Messanordnung für fluorometrische Messungen umfassen oder dafür ausgeführt sein, mit einer solchen zusammen zu wirken.

Ferner kann die erfindungsgemäße Vorrichtung zusätzlich eine Messanordnung für die Messung optischer Absorbanz, lokalisierter Plasmonresonanz, Reflexion oder Streuung umfassen oder dafür ausgeführt sein, mit einer solchen zusammen zu wirken.

Ferner kann die erfindungsgemäße Vorrichtung zusätzlich eine Messanordnung für die Erzeugung und Messung von oberflächenakustischen Wellen bzw. Resonanzfrequenzen von Schwingquarzen oder Mikro-Kantilevern umfassen oder dafür ausgeführt sein, mit einer solchen zusammen zu wirken.

Ferner kann die erfindungsgemäße Vorrichtung zusätzlich eine Messanordnung für Impedanzmessungen und/oder elektrochemische Messungen umfassen oder dafür ausgeführt sein, mit einer solchen zusammen zu wirken.

Vorteilhaft kann die erfindungsgemäße Vorrichtung zusätzlich einen digitalen oder analogen Signalprozessor umfassen oder dafür ausgeführt sein, mit einem solchen zusammen zu wirken. Der Signalprozessor kann dafür ausgeführt oder programmiert sein, die Daten von den Spots A und den Spots B auszuwerten. Es wird speziell - aber nicht ausschließlich - daran gedacht, dass der Prozessor die Signalsummen für die einzelnen Spot-Typen A₁, A₂, ..., Aₙ, B ausrechnet und die Werte (α₁A₁-B), (α₂A₂-B), ..., (αₙAₙ - B) bzw. α₁A₁ / B, α₂A₂ / B, ..., αₙAₙ / B berechnet. Die Werte α_{1,} α₂, ... αₙ sind vorzugsweise konstant. Sind die Signalwerte unabhängig von der Spotfläche, so können die α-Werte den Wert 1 einnehmen. Ansonsten werden die α-Werte in der Regel ein Flächenverhältnis angeben: αᵢ = (Spotfläche B/Spotfläche A). Es kommt durchaus auch in Betracht, dass die α-Werte von den Materialien und dem Aufbau der Spots A und B abhängen. Sind nur Spots A eines Typs vorhanden, so mag im Rahmen einer Messung auch nur eine Signalsumme für Spots A und eine Signalsumme für Spots B zu berechnen sein, woraus dann typischerweise weiter (αA-B) bzw. αA/B zu berechnen ist.

Es wird beispielsweise an eine Anwendung der erfindungsgemäßen Vorrichtung für die Bestimmung des Brechungsindex eines flüssigen, gasförmigen oder festen Mediums gedacht.

Ferner wird beispielsweise an eine Anwendung der erfindungsgemäßen Vorrichtung für die Detektion der Bindung von Molekülen (insbesondere etwa DNA, RNA, Proteine, Zucker, Polysacharide, Antikörper, Hormone, Lipide, Mediatoren der Signalübertragung, pharmazeutische Stoffe, Metabolite, Toxine), molekularen Komplexen, Zellenorganellen, Zellen, Viren, Bakteriophagen, Prionen an den entsprechenden Rezeptoren gedacht.

Es wird an die Bereitstellung der erfindungsgemäßen Vorrichtung bzw. Verwendung der erfindungsgemäßen Vorrichtung als Biosensor oder/und chemischer Sensor gedacht. Es wird insbesondere auch an die Bereitstellung der erfindungsgemäßen Vorrichtung bzw. Verwendung der erfindungsgemäßen Vorrichtung als DNA bzw. RNA - Sonde gedacht.

Soweit im Rahmen der Erfindung bzw. deren Anwendung eine Messdatenerfassung vorgesehen ist, die einer Bilderfassung zugänglich ist oder auf einer Art Bilderfassung beruht, kann vorteilhaft eine vorzugsweise digitale Filtration von erfassten Bildern für die Detektion und Erkennung von künstlichen oder natürlichen Objekten, insbesondere beispielsweise im Größenbereich bis 100 µm, vorgesehen sein.

Nach einem wichtigen Aspekt stellt die Erfindung ein Multi - Sensorarray für analytische, bioanalytische oder physikalische Untersuchungen bereit oder die erfindungsgemäße Vorrichtung ist als Multi-Sensorarray für solche Untersuchungen einsetzbar.

Die oben definierte und hinsichtlich bevorzugter Weiterbildungen beschriebene Sensor-Einrichtung der Erfindung kann eine erfindungsgemäße Vorrichtung für Sensor- oder Transducer-Anwendungen oder Sensor-Vorrichtung bzw. Vorrichtung entsprechend der vorangehenden Beschreibung umfassen oder von einer solchen gebildet sein.

Die Erfindung stellt ferner bereit ein Messverfahren, durchgeführt unter Verwendung einer erfindungsgemäßen Sensor-Einrichtung bzw. einer erfindungsgemäßen Vorrichtung.

Die erfindungsgemäße "verteilte Referenzierung" kann unabhängig von herkömmlicher aufwendiger Mikrofluidik und hochpräziser Temperaturstabilisierung verwendet werden, mit entsprechender Vereinfachung des Messaufbaus: Man kann die "verteilte Referenzierung" also als eine Alternative für bisherige Lösungen benutzen, oder auch zusammen mit der Mikrofluidik und hochpräziser Temperaturstabilisierung benutzen, um eine bessere Kompensation zu erreichen.

Die physikalischen und chemischen Sensoren mit verteilter Referenzierung können als einzelne differentielle Sensoren oder als Sensorenarrays aufgebaut sein. Im letzten Fall verwendet man mehrere unterschiedlichen Gruppen von beliebig (aber vorzugsweise relativ gleichmäßig) verteilten Sensorspots (mit demselben Sensortyp in jeder Gruppe) und beliebig (aber vorzugsweise relativ gleichmäßig) verteilten Referenzspots.

Es wird besonders - aber nicht ausschließlich - an die Anwendung des Erfindungsvorschlags im Zusammenhang mit Oberflächen-Plasmonen-Resonanz-Sensoren und -Messungen (SPR) gedacht. Der Erfindungsvorschlag kann vorteilhaft aber auch in Zusammenhang mit völlig anderen Sensor-Typen und Messverfahren angewendet werden.

So haben etwa optische Chemo- und Biosensoren, die auf der Ellipsometrie oder Interferometrie basieren, sehr ähnliche Strukturen wie SPR-Sensoren und haben mit den gleichen oder ähnlichen Artefakten zu kämpfen. Lokale Fluktuationen und Gradienten der Temperatur und anderer Parameter sind auch in anderen Methoden kritisch, z. B. in fluoreszenten Bio- und Chemosensoren, insbes. DNA-Arrays.

So wie auch für SPR-Sensoren vorgeschlagen, können nach der Erfindung etwa DNA-Arrays mit verteilten Referenzspots ausgeführt werden. Vorgeschlagen wird, eine Mehrzahl, insbesondere Vielzahl identischer Referenz- und Meßspots vorzusehen. Die Spots gleichen Typs können im Prinzip beliebig relativ zueinander angeordnet sein, es sollte nur der Abstand zwischen den Referenzspots einerseits und den Messspots andererseits minimiert sein.

Die Datenauswertung kann durch die Differenzbildung zwischen den Mittelwerten der Signale von den Referenz- und Messspots erfolgen, wie im Folgenden im Prinzip in Bezug auf SPR-Sensoren exemplarisch näher erläutert.

Verteilte Referenz- und Sensor-Spots nach der Erfindung ermöglichen die Verbesserung des Signal-zu-Rauschen-Verhältnisses auch bei Messverfahren unter Verwendung von DNA-Arrays mit fluoreszenter Detektion, die auf fluoreszierenden Intercallatoren (intercalators, zum Beispiel Hoechst33258, Hoechst33342, Ethydiumbromid, TOTO, PicoGreen oder irgend ein anderer im Fachgebiet üblicher Farbstoff) oder Reporter-Sequenzien mit fluoreszierenden Labels basieren. Gegenüber einem Vorschlag für eine Referenzierung von Fluoreszenzintensitätssignalen gemäß DE 198 29 657 A1 (I. Klimant), die auf Fluoreszenzsignalen von zwei oder mehr Luminoforen basiert, kann nach der erfindungsmäßen Verwendung von verteilten Referenz- und Sensor-Spots die Messung auf fluoreszenten Signalen von nur einem Luminofor basieren.

Die erfindungsgemäße "verteilte Referenzierung" kann ferner bei mechanisch-akustischem Transducern für Chemo- und Bosensoren eingesetzt werden, insbesondere wenn diese als Array (z. B. Transducern auf Basis von surface acoustic waves-devices (SAW) oder Microcantilevers) verwendet werden.

Die erfindungsgemäße "verteilte Referenzierung" kann ferner bei elektrochemischen Chemo- und Biosensoren verwendet werden, z. B. bei chemischen und biologischen Sensoren, die auf Impedanzmessungen, lateralen Leitfähigkeitsmessungen von leitenden Polymeren oder elektrochemischen Messungen der Geschwindigkeit enzymatischer Reaktionen basieren.

Die erfindungsgemäße "verteilte Referenzierung" kann auch in physikalischen Sensoren, z. B. in Photodetektoren, eingesetzt werden.

Neben dem Anwendungsgebiet SPR kommen für die Anwendung des Erfindungsvorschlags also auch diverse andere Detektionsmethoden (etwa ellipsometry, interferometry, fluorescence, optical absorbance, light scattering, localized plasmon resonance), mechanisch-akustische Messmethoden (etwa SAW, microcantilevers), elektrische Messmethoden (etwa conductivity changes of conductive polymers) and electrochemische Messmethoden (etwa chronoamperometry, impedometry, voltammetry, potentiometry, ...) in Betracht, unter Bereitstellung und Verwendung entsprechender Transducer oder Sensor-Vorrichtungen. Ein "Transducer" dient in der Chemo- und Biosensorik dazu, "chemische" Werte oder Größen (z.B. die Menge von Molekülen, die mit Rezeptorschicht auf eine Sensoroberfläche gebunden sind oder die Geschwindigkeit der enzymatischen Reaktion in einer Enzymschicht auf Sensoroberfläche) in physikalysche Werte oder Größen (z.B., Lichtintensität, Wellenlänge, Schwingfrequenz, elektrische Stromstärke oder Spannung oder elektrisches Potential) umzuwandeln.

Die Erfindung wird im Folgenden anhand der in den Figuren gezeigten Beispiele und Diagramme und der sich aus dem folgenden Text ergebenden Beispiele näher erläutert.
- Figur 1: illustriert einen Temperatur- oder/und Reagenzkonzentration-Unterschied zwischen einem Messspot (schwarz) und Referenz-Spot (hellgrau) für herkömmliche makroskopische Sensoren.
- Figur 2: illustriert einen Temperatur- oder/und Reagenzkonzentration-Unterschied zwischen Messspot (schwarz) und Referenz-Spot (leichtgrau) für einen erfindungsgemäßen Sensor mit verteilten Sensor- und Referenz-Spots.
- Figur 3: zeigt in Teilfigur 3a einen einzelnen Sensor mit verteilten Mess- und Referenz-Spots und in Teilfigur 3b ein Sensor-Array mit verteilten Mess- und Referenz-Spots.
- Figur 4: zeigt in Teilfigur 4a ein Diagramm, das die Wirksamkeit der verteilten Referenzierung anhand eines gemessenen Signalunterschieds zwischen identischen Spots demonstriert, auf Grundlage von Messungen an Spot-Anordnungen gemäß Teilfigur 4b.
- Figur 5: zeigt einen exemplarischen SPR-Messaufbau, der im Rahmen von Messungen auf Basis der erfindungsgemäßen verteilten Referenzierung zum Einsatz kommen kann.
- Figur 6: zeigt ein Diagramm, das die Wirksamkeit der verteilten Referenzierung bei einer Biosensor-Anwendung demonstiert.

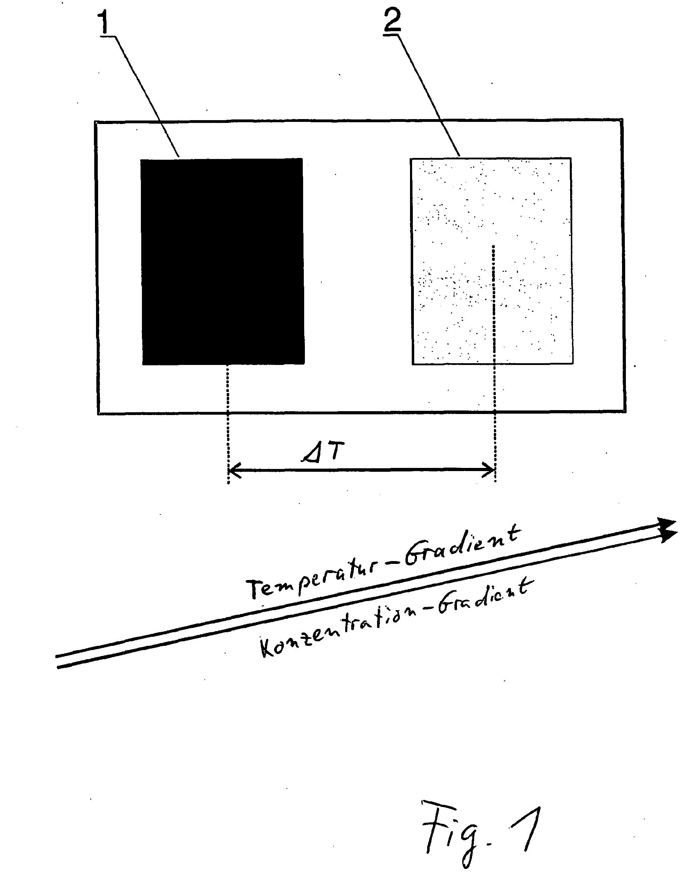

Figur 1 zeigt eine herkömmliche Anordnung aus einem Messspot 1 und einem Referenz-Spot 2. Beispielsweise aufgrund eines Zuflusses einer Reagenzienlösung ergibt sich bei der Messung ein Temperatur-Gradient (durch Pfeil repräsentiert), so dass zwischen einer mittleren Temperatur des Messspots 1 und einer mittleren Temperatur des Messspots 2 ein Temperaturunterschied ΔT besteht. Wird beispielsweise in einer Oberflächenplasmonenresonanz-Messung eine chemische oder biologische Größe mittels des Messspots 1 gemessen und diese mittels einer Referenzmessung anhand des Referenzspots 2 korrigiert, so ist die Korrektur entsprechend dem Temperaturunterschied ΔT fehlerhaft oder unvollkommen. Je kleiner der Temperaturunterschied ΔT zwischen dem Messspot und dem Referenzspot ist, desto besser kann die Korrektur sein. Da der mittlere wirksame Abstand zwischen Mess- und Referenzspots von der mittleren Größe der Spots abhängt, kann nach dem herkömmlichen Ansatz der Spotabstand nicht beliebig reduziert werden, so dass beachtliche Temperaturunterschiede ΔT verbleiben, sofern nicht unter großem apparativem Aufwand für eine Minimierung des Temperatur-Gradienten selbst gesorgt wird. Entsprechendes gilt für andere die Messung beeinflussende Parameter, beispielsweise der Gradient einer Konzentration einer Reagenzlösung (durch Pfeil repräsentiert) oder dergleichen.

Anzumerken ist, dass sich an der in Bezug auf Figur 1 beschriebenen Situation des herkömmlichen Ansatzes auch dann nichts ändert, wenn der in Figur 1 zwischen dem Messspot 1 und dem Referenzspot 2 dargestellte Zwischenraum verkleinert ist und der Messspot und der Referenzspot unmittelbar aneinander angrenzen. Maßgeblich ist auch der auf die Mittelpunkte der Spots bezogene Spot-Abstand, da zumindest in einer näherungsweisen Betrachtung die Messsignale vom Messspot und vom Referenzspot trotz des Temperatur-Gradienten oder sonstigen Gradienten in der Regel über die jeweilige Spotoberfläche einem jeweiligen Signal entsprechen, welches für einen Spot erhalten werden würde, der über seine gesamte Oberfläche einer Temperatur oder sonstigen Randbedingungen unterliegt, die der Temperatur bzw. den Randbedingungen am Spotmittelpunkt entsprechen. Dies gilt jedenfalls für Messmethoden, die integrale Signale ganzer Messoberflächen liefern.

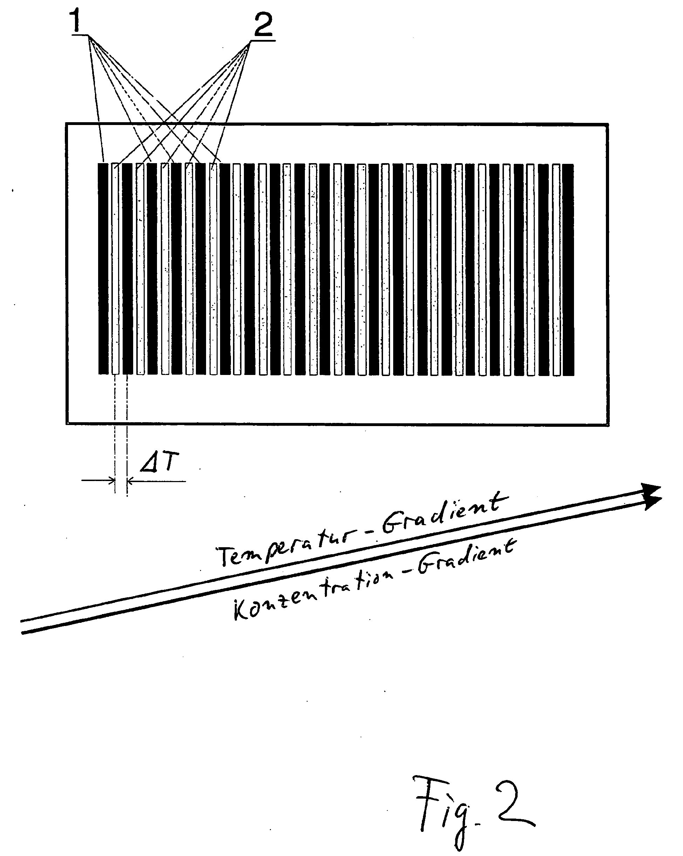

Figur 2 zeigt demgegenüber ein Beispiel für ein erfindungsgemäßes Feld von verteilten Messspots 1 und Referenzspots 2. Die Mess- und Referenzspots sind längs einer Richtung derart verteilt, dass - von den Randspots abgesehen - ein jeweiliger Messspot zwischen zwei unmittelbar benachbarten Referenzspots und ein jeweiliger Referenzspot zwischen zwei unmittelbar benachbarten Messspots angeordnet ist und der Abstand zwischen benachbarten Mess- und Referenzspots kleiner als die Erstreckung der Mess- und Referenzspots in dieser Richtung ist. Ein zwischen benachbarten Mess- und Referenzspots für einen gegebenen Temperatur-Gradienten auftretender Temperaturunterschied ΔT ist somit wesentlich kleiner als sich für den gleichen Temperatur-Gradienten für herkömmliche Mess- und Referenzspots gemäß Figur 1 ergeben würde. Gleiches gilt für andere Gradienten, wie Gradienten von Konzentrationen usw.

Da eine Mehrzahl oder Vielzahl von Mess- und Referenzspots vorgesehen ist, kann trotz der geringen Ausdehnung des Spots in der Verteilungsrichtung in der Summe ein hinreichendes oder sogar sehr gutes Signal-zu-Rauschen-Verhältnis erzielt werden, das in Abhängigkeit von der wirksamen Gesamtfläche sogar wesentlich besser als bei der herkömmlichen Lösung gemäß Figur 1 ist. Insbesondere kann auch ein wesentlich verbessertes Signal-zu-Signaldrift-Verhältnis erzielt werden und insgesamt eine wesentlich verbesserte Messempfindlichkeit erreicht werden, da die Messempfindlichkeit begrenzende Artefakte und Drifts aufgrund variierender und unterschiedlicher Mess-Randbedingungen zwischen Mess- und Referenzspots wirksam kompensiert werden können. In einer anschaulichen Betrachtung kann man sich vorstellen, dass für jeden Messspot jeweils wenigstens ein eng benachbarter Referenzspot vorgesehen ist, der fast den gleichen Mess-Randbedingungen unterliegt und so wirkungsvoll die Kompensation der Messung ermöglicht. Hierzu kann eine Signalverarbeitung durchgeführt werden, die die Signale von allen oder einer Mehrzahl oder Vielzahl von ausgewählten Mess- und Referenzspots berücksichtigt. Dies führt zu einer Reduzierung von Signalbeiträgen aufgrund von Temperaturfluktuationen und sonstigen Fluktuationen, etwa des Drucks, einer Reagenzfluktuation oder anderer Parameter, bis auf ein Niveau, dass die resultierenden Signalfluktuationen geringer sind als zwischen zwei benachbarten miniaturisierten Mess- und Referenzspots. Da die Gesamtoberfläche der Spots makroskopisch bleibt, wird das Schrot-Rauschen und werden andere Rauschquellen unterdrückt, die bezogen auf die Fläche eines einzelnen Spots aufgrund deren Miniaturisierung relevant oder sogar begrenzend wären. Ferner sorgt der geringe effektive Abstand zwischen Mess- und Referenzspots für eine schnelle Wärmediffusion und vermeidet oder reduziert lokale Temperaturgradienten, die etwa aus Analyt-Rezeptor-Wechselwirkungen, etwa exothermen oder endothermen Effekten aufgrund einer Anbindung des Analyten an einen jeweiligen Rezeptor, resultieren.

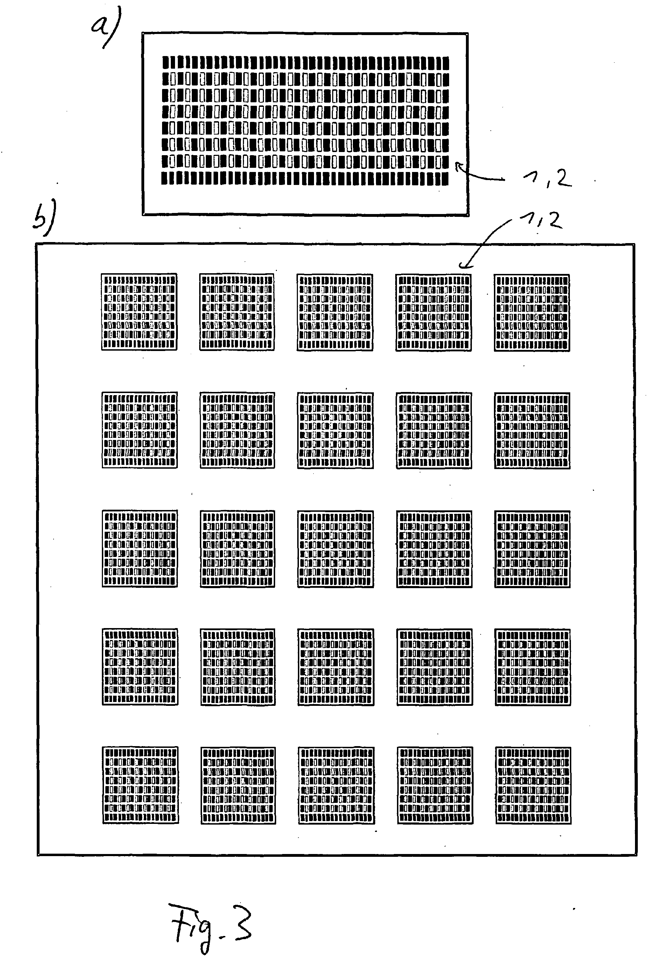

Ein erfindungsgemäßer Sensor kann ein einzelnes Sensorfeld mit verteilten Sensor- und Referenzspots aufweisen, wie in Figur 3a veranschaulicht, oder als Sensor-Array ausgeführt sein und mehrere Felder mit verteilten Sensor- und Referenzspots aufweisen, wie in Figur 3b veranschaulicht. Für jedes Feld sind die Messspots für die Messung der gleichen chemischen, biologischen oder sonstigen Größe funktionalisiert. Sind entsprechend Figur 3b mehrere Felder von Mess- und Referenzspots vorgesehen, so kann jedes Feld für die Messung einer anderen chemischen, biologischen, physikalischen oder sonstigen Größe vorgesehen sein, indem die Messspots hierfür funktionalisiert sind. So können simultan mehrere Größen gemessen werden.

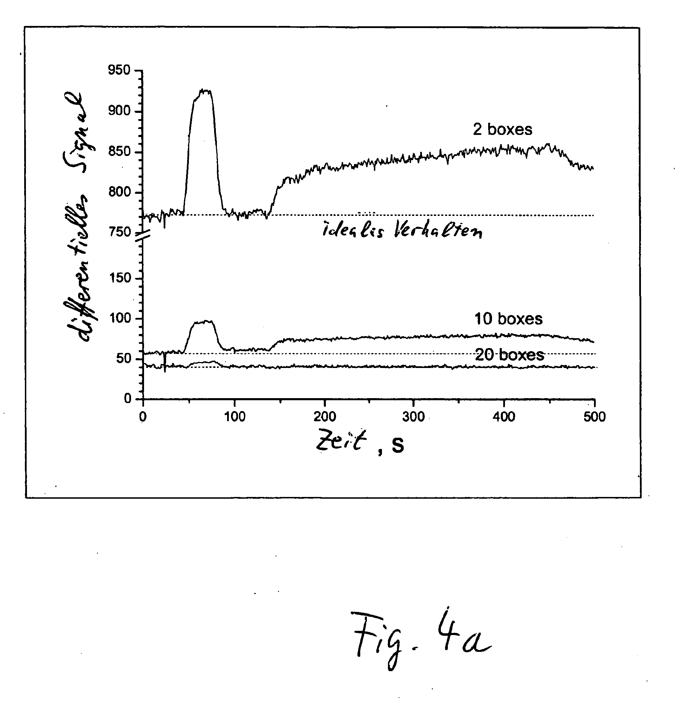

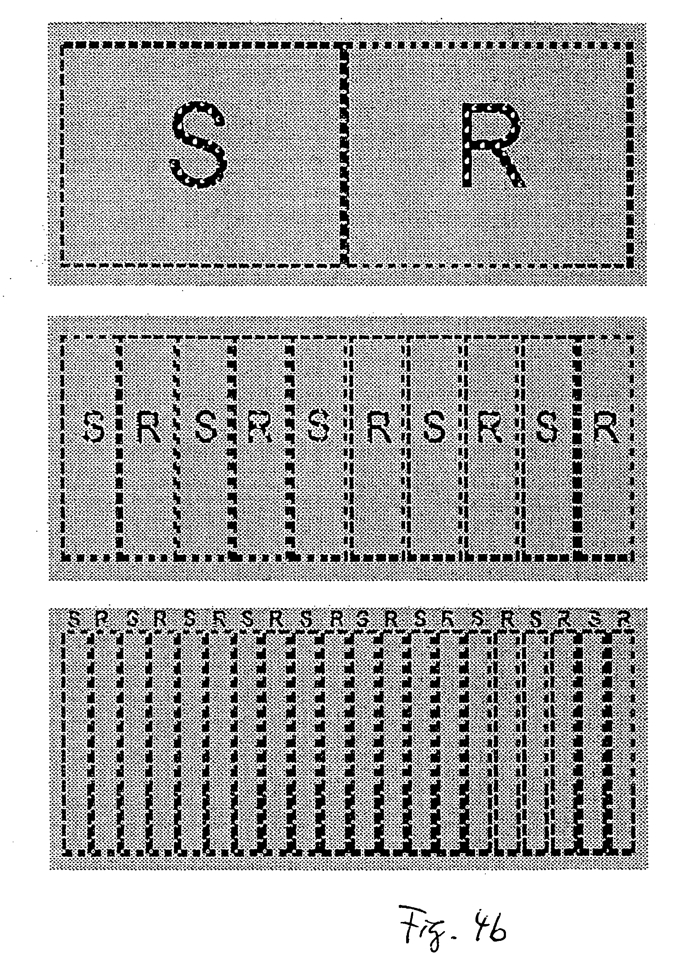

Figur 4a zeigt ein Messergebnis für den Signalunterschied zwischen identischen Spots bei einer SPR-Messung, von denen einer bzw. eine Gruppe als Referenzspots und einer bzw. eine Gruppe als Messspots verwendet wird, nach Zugabe von heißem Elektrolyt in eine Flusszelle der SPR-Messanordnung. Zum Vergleich wurden Messungen an folgenden, in Figur 4b schematisch dargestellten Referenzspot- und Messspot-Anordnungen durchgeführt: ein Referenzspot und ein Messspot ("2 boxes"), lineare verteilte Strukturen aus fünf Referenzspots und fünf Messspots ("10 boxes"), lineare verteilte Strukturen aus zehn Referenzspots und zehn Messspots ("20 boxes"). Die Beschichtung der Referenzspots (in Figur 4b mit "R" bezeichnet) und Messspots (in Figur 4b mit "S" bezeichnet) und die Gesamt-Flächen sind identisch, so dass im Idealfall der Signalunterschied aufgrund einer vollständigen Kompensation des auftretenden Temperaturgradienten verschwinden, also gleich null sein sollte. Die Ergebnisse zeigen, dass der Signalunterschied zwischen verteilten Mess- und Referenzspots viel näher am idealen Verhalten (punktierte Linien) liegt als bei der herkömmlichen Lösung mit einem Referenzspot und einem Messspot.

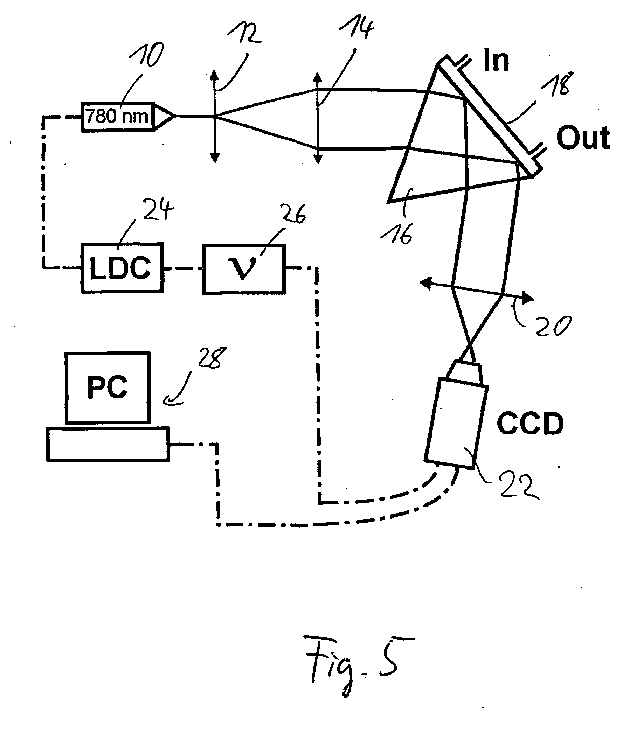

Ein typischer Messaufbau für eine SPR-Messung ist in Figur 5 gezeigt. Ein Laserstrahl von einer Laserdiode 10 (beispielsweise Wellenlänge 784 nm) wird durch zwei Linsen 12, 14 zu einem Durchmesser von etwa 3 cm aufgeweitet. Ein für die Erzeugung einer SPR-Resonanz verwendetes Prisma 16, in das der aufgeweitete Laserstrahl eingekoppelt wird, weist beispielsweise eine Eingangsfläche von 2 x 1 cm² auf. An der mit einer geeigneten Metallschicht, vorliegend eine Goldschicht, beschichteten Rückseite des Prismas ist eine Flusszelle 18 beispielsweise aus Plexiglas angebracht. Für Messungen nach der Erfindung ist auf der Metallschicht ein erfindungsgemäßes Spotfeld mit verteilten Mess- und Referenzspots ausgebildet, z.B. entsprechend Figur 2, Figur 3a oder Figur 3b, oder entsprechend Figur 4b, Mitte oder unten. Von der Goldoberfläche reflektiertes Licht wird mit Hilfe einer Optik 20 durch eine CCD-Kamera 22 ortsaufgelöst erfasst. Zur Realisierung einer Art Lock-in-Messtechnik sind die CCD-Kamera 22 und eine Lasertreiberschaltung 24 durch einen Rechteckwellengenerator 26 mit einer Frequenz von 1 kHz synchronisiert. Bei einer CCD-Kammera kann es sich beispielsweise um eine modifizierte Kamera MV14-285 mit 36000 Elektronen pro Pixel handeln, mit einer CCD-Chipgröße von 1024 x 1360 Pixeln. Die in den Pixeln integrierte Ladung wird dann mit 14 Bit Auflösung in ein digitales Signal umgewandelt und durch eine Frame-Grabe-Karte in einen Computer (PC) 28 übertragen zur weiteren Auswertung. Es ist so eine ortsaufgelöste Erfassung der Messsignale bzw. Referenzsignale für jeden einzelnen Messspot und Referenzspot der verteilten Mess- und Referenzspots möglich.

Die Messung und Datenanalyse bei einer differentiellen SPR-Messung kann auf Grundlage einer typischen SPR-Messsituation unter Anwendung des Erfindungsvorschlags und beispielsweise unter Verwendung der Anordnung gemäß Figur 5 beispielsweise wie folgt erfolgen:
1. Es erfolgt eine Kalibrierung der Mess- und Referenz-Spots. Hierfür wird das Wasser in der Flusszelle durch eine Kalibrierungs-Lösung (z. B. 0.1% NaCl) ausgetauscht, und es wird die Änderung des SPR-Signals auf allen Spots gemessen. Basierend auf dieser Lösung werden die Signale sämtlicher Spots in absolute Einheiten (refractive index units - RIU) umgerechnet. Die Kalibrierung erlaubt es, lokale Unregelmäßigkeiten der Sensorenoberfläche zu berücksichtigen, z. B. ungleichmäßige Goldschichtdicke.
2. Analyt wird hinzugefügt und es werden die Signale sämtlicher oder ausgewählter Spots gemessen.
3a. Der (arithmetische) Mittelwert der Signale sämtlicher oder ausgewählter Mess-Spots (Spots vom Typ A) wird ausgerechnet (weiter mit <A> bezeichnet).
3b. Der (arithmetische) Mittelwert der Signale sämtlicher oder ausgewählter Referenz-Spots (Spots vom Typ B) wird ausgerechnet (weiter mit <B> bezeichnet).
4. Die Differenz <A> - <B> wird berechnet.

Entsprechendes gilt für andere SPR-Messsituationen. Analog können die Signale bei der Verwendung der erfindungsgemäßen verteilten Referenzierung auch bei anderen Detektionsmethoden berechnet werden, z. B. in der Ellipsometrie, Interferometrie, lokaler Plasmonresonanz auf Monoschichten von Nanopartikeln, Mikrokantilevern, SAW (surface acoustic wave)-Geräten, Fluoreszenzintensität, usw.

Bei der Verwendung von Signalen, die von der Sensorenfläche abhängen (z. B. Messung der elektrischen Kapazität oder der elektrischen Stromstärke) kann zweckmäßig das Signal von jedem Spot auf die Fläche des entsprechenden Spots oder der Mittelwert der Signale auf die Gesamtfläche der entsprechenden Spots normiert werden.

In einigen Fällen ist die Abhängigkeit des gemessenen Signals exponential von der Konzentration des Analyten abhängig (z. B. bei der Nutzung von optischen Sensoren, deren Verhalten durch das Lambert-Beersches-Gesetz beschrieben wird). In diesem Fall können die Signale zweckmäßiger durch die Berechnung des Verhältnisses <A> / <B> analysiert werden. Bei geringen Signaländerungen kann auch hier die zuvor genannte Berechnungsmethode <A> - <B> angewandt werden.

In Methoden der Datenanalyse für Sensoren, die auf der Fluoreszenz-Abklingzeit basieren, kann auch die Abhängigkeit der Abklingzeit von der Konzentration des Analyten verwendet werden.

### Beispiel 1

Es wird eine Anwendung der verteilten Referenzierung in Oberflächenplasmonresonanz-Biosensoren demonstriert. Für die Messungen wird ein SPR-Mikroskop mit CCD-Kamera verwendet. Das Mikroskop kann unterschiedlich realisiert sein, wie zum Beispiel in Figur 5 dargestellt, oder mit der double-wavelength-Technologie [Anal. Chem., 2005, 77, 2393-2399]. Als Resonanzschicht wird eine aufgedampfte 60 nm dicke Goldschicht mit 5 nm dicker Chrom-Adhesionsschicht verwendet. Die Referenzspots wurden mit dem Thiolderivat der Structur HS-(CH2)₁₁-(O-CH₂-CH₂)₄-OH beschichtet. Die Referenzspots haben die Große 100 x 100 µm und befinden sich auf einer Goldoberfläche, verteilt wie "weiße Schachbrettfelder". Die restliche Goldoberfläche (die wie "schwarze" 100 x 100 µm Schachbrettfelder verteilt ist) wurde mit der 1,15-Mercaptohexadecansäure beschichtet. Die ortsaufgelöste Beschichtung wurde mit einer der bereits bekannten Technologien vorgenommen, z. B. mittels Mikrostamp-Technologie [H. O. Jacobs et al, WO 02/03142 A2], mittels Verwendung eines kommerziellen Nanoplotters oder als elektrischaddressierbare Immobilisierung [V. M. Mirsky et al., US 6,458,600 B1]. Für die letzte Technologie braucht man eine entsprechende Strukturierung der Goldschicht, die durch photolithographische Verfahren machbar ist. Anschließend wurden auf COOH-Gruppen der immobilisierten 1,15-Mercaptohexadecansäure eine Rezeptorenschicht (z. B. Antikörper gegen HSA) immobilisiert. Die Immobilisierungtechnologie mit wasserlöslichem Carbodiimid (EDC) ist in der Fachliteratur detailliert beschrieben [V. M. Mirsky et al., Biosensors & Bioelectronics, 1997, 12, 977-989], [N. Wrobel et al., Colloids and Surfaces B: Biointerfaces, 2003, 32, 157-162]. Die Signaldetektion läuft ähnlich wie in [Anal. Chem., 2005, 77, 2393-2399], aber mit CCD-Kamera und entsprechender Optik statt Photodiode. Der Vergleich des Signal-zu-Rausch-Verhältnisses und auch des Signaldrifts gemessen mit und ohne verteilter Referenzierung zeigt eine ca. 10 bis 50-fache Verbesserung für die verteilte Referenzierung gegenüber der herkömmlichen Referenzierung.

### Beispiel 2

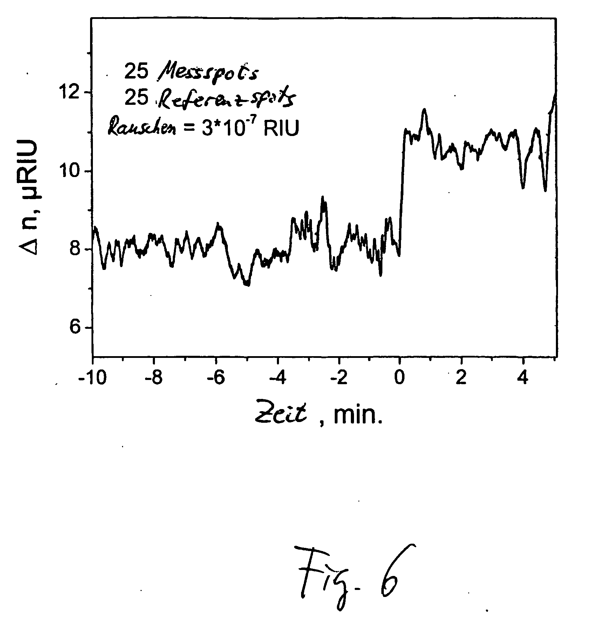

Ein Beispiel der Erfassung von kleinen Molekülen mittels der verteilten Referenzierungstechnik bzw. -methode ist in Figur 6 gezeigt. Es wurde das folgende Spot-Layout verwendet: streifenförmige Mess- und Referenzspots mit einer jeweiligen Breite von 200 µm, insgesamt 50 Streifen, nämlich 25 Messspots oder Messstreifen und 25 Referenzspots oder Referenzstreifen.

Die Streifenlänge beträgt ca. 1,2 mm und es besteht praktisch kein Abstand zwischen benachbarten Mess- und Referenzstreifen. Entsprechend Figur 2 sind die Mess- und Referenzstreifen abwechselnd angeordnet.

Die Messstreifen sind mit einer monomolekularen Schicht von Streptavidin beschichtet. Zum Zeitpunkt Null wurde 1 µ mol/L von Biotin in die Flusszelle injiziert. Es resultierte mit verschwindender Zeitverzögerung ein sprunghafter Anstieg der Kurve, der auf der Anlage der Biotin-Moleküle an der Sreptavidin-Schicht der Messspots beruht. Das Rauschen während der Messung betrug etwa 3 x 10⁻⁷ der Brechungsindexeinheiten RIU. Das Signal-zu-Rauschen-Verhältnis für die Biotinerfassung betrug etwa 10.

Das für eine herkömmliche Messung ohne verteilte Referenz etwa zu erwartende Signal-zu-Rauschen-Verhältnis ist stark abhängig von der verwendeten SPR-Konfiguration. Für die einfachste, der Vermessung mit der verteilten Referenz gemäß Figur 6 zugrunde liegende einfache Konfiguration (ohne spezielle Thermostatisierung, ohne Doppelwellenlängen-Technik, usw.) wäre es bei einer identischen Beschichtung fast unmöglich, die Detektion von Biotin durchzuführen, da ein Signal-zu-Rauschen-Verhältnis <1 zu erwarten wäre.

Vorgeschlagen wird eine Sensor-Einrichtung, umfassend wenigstens eine Anordnung von auf oder in einem gemeinsamen Substrat angeordneten oder von einem gemeinsamen Substrat gehaltenen Sensorspots, wobei wenigstens eine erste Gruppe von mehreren Sensorspots der Anordnung als Messspots ausgeführt ist, die auf wenigstens eine zu messende Größe ansprechen und auf deren Grundlage mittels einer Messanordnung wenigstens ein die zu messende Größe oder eine Änderung der zu messenden Größe direkt oder indirekt repräsentierendes Messsignal bereitstellbar ist, und wenigstens eine zweite Gruppe von mehreren Sensorspots der Anordnung als Referenzspots ausgeführt ist, die auf die zu messende Größe nicht oder nur unwesentlich ansprechen und auf deren Grundlage mittels der Messanordnung wenigstens ein Referenzsignal bereitstellbar ist, wobei die Referenzspots in Bezug auf die zugeordneten Messspots derart ausgeführt sind, dass die Referenzspots auf wenigstens eine Randbedingungsgröße ansprechen, auf die auch die Messspots ansprechen und die das wenigstens eine Messsignal beeinflusst, so dass das Referenzsignal die Randbedingungsgröße oder eine Änderung der Randbedingungsgröße direkt oder indirekt repräsentiert. Erfindungsgemäß ist vorgesehen, dass sie Sensorspots derart verteilt angeordnet sind, dass sowohl die Referenspots als auch die auf die gleiche zu messende Größe ansprechenden Messspots über einen gemeinsamen Anordnungsbereich verteilt sind, so dass bezogen auf wenigstens eine Richtung derartige Messspots zwischen Referenzspots und Referenzspots zwischen derartigen Messspots angeordnet sind.

## Patentansprüche

1. Plasmonenresonanz-Sensor-Einrichtung, umfassend wenigstens eine Anordnung von auf oder in einem gemeinsamen Substrat angeordneten oder von einem gemeinsamen Substrat gehaltenen Sensorspots (1, 2), wobei wenigstens eine erste Gruppe von mehreren Sensorspots der Anordnung als Messspots (1) ausgeführt ist, die auf wenigstens eine zu messende Größe ansprechen und auf deren Grundlage mittels einer Messanordnung wenigstens ein die zu messende Größe oder eine Änderung der zu messenden Größe direkt oder indirekt repräsentierendes Messsignal bereitstellbar ist, und wenigstens eine zweite Gruppe von mehreren den Messspots (1) zugeordneten Sensorspots (2) der Anordnung als Referenzspots ausgeführt ist, die auf die zu messende Größe nicht oder nur unwesentlich ansprechen und auf deren Grundlage mittels der Messanordnung wenigstens ein Referenzsignal bereitstellbar ist,
wobei in dem Substrat eine Plasmonenresonanz anregbar ist und das Messsignal und das Referenzsignal von der Anregung oder Nicht-Anregung einer Plasmonenresonanz oder von der Wechselwirkung der angeregten Plasmonen mit der Umgebung im Bereich eines jeweiligen Messspots (1) bzw. Referenzspots (2) abhängen,
wobei die Referenzspots (2) in Bezug auf die zugeordneten Messspots (1) derart ausgeführt sind, dass die Referenzspots auf wenigstens eine Randbedingungsgröße ansprechen, auf die auch die Messspots (1) ansprechen und die das wenigstens eine Messsignal beeinflusst, so dass das Referenzsignal die Randbedingungsgröße oder eine Änderung der Randbedingungsgröße direkt oder indirekt repräsentiert, wobei sowohl die Referenzspots (2) als auch die auf die gleiche zu messende Größe ansprechenden Messspots (1) über einen gemeinsamen Anordnungsbereich verteilt sind, so dass bezogen auf wenigstens eine Richtung für eine Mehrzahl dieser Messspots (1) und Referenzspots (2) oder - vorzugsweise - für alle Messspots (1) oder/und alle Referenzspots (2) wenigstens eine der folgenden Anordnungsvorschriften erfüllt ist:
i) bezogen auf die wenigstens eine Richtung sind die Messspots und die zugeordneten Referenzspots derart gegeneinander versetzt angeordnet, dass ein jeweiliger Messspot (1) zwischen zwei unmittelbar benachbarten Referenzspots (2) angeordnet ist;
ii) bezogen auf die wenigstens eine Richtung sind die Messspots und die zugeordneten Referenzspots derart gegeneinander versetzt angeordnet, dass ein jeweiliger Referenzspot (2) zwischen zwei unmittelbar benachbarten Messspots (1) angeordnet ist,
wobei die Gruppe von Messspots (1) wenigstens vier, vorzugsweise wenigstens acht, höchstvorzugsweise wenigstens zwölf, noch stärker bevorzugt wenigstens zwanzig Messspots umfasst, die auf die gleiche Größe ansprechen und mit den zugeordneten Referenzspots (2) über den gemeinsamen Anordnungsbereich verteilt sind,
wobei die Messanordnung (10, 12, 14, 16, 18, 20, 22, 24, 26) oder/und eine dieser zugeordnete Auswerteanordnung (28) dafür ausgeführt ist, individuelle Messsignale von den auf die gleiche zu messende Größe ansprechenden Messspots (1) und individuelle Referenzsignale von den den Messspots zugeordneten Referenzspots (2) oder hieraus erhaltene Folgesignale oder Folgedaten zu summarischen oder mittleren Mess- und Referenzsignalen bzw. Mess- und Referenzfolgesignalen bzw. Mess- und Referenzfolgedaten entsprechenden Kombinationssignalen bzw. Kombinationsfolgesignalen bzw. Kombinationsfolgedaten zu kombinieren und Differenzen oder Verhältnisse zwischen den gegebenenfalls normierten Messkombinationssignalen bzw. Messkombinationsfolgesignalen bzw. Messkombinationsfolgedaten einerseits und den gegebenenfalls normierten Referenzkombinationssignalen bzw. Referenzkombinationsfolgesignalen bzw. Referenzkombinationsfolgedaten anderseits zu bilden, um Informationen über die zu messende Größe oder deren Änderung zu erhalten.

2. Sensor-Einrichtung nach Anspruch 1, **dadurch gekennzeichnet, dass** die Sensorspots derart verteilt angeordnet sind, dass bezogen auf wenigstens eine weitere Richtung auf die gleiche zu messende Größe ansprechende Messspots zwischen zugeordneten Referenzspots und Referenzspots zwischen zugeordneten, auf die gleiche Größe ansprechenden Messspots angeordnet sind.

3. Sensor-Einrichtung nach Anspruch 1, **dadurch gekennzeichnet, dass** die Sensorspots (1, 2) in Bezug auf eine weitere Richtung ausgedehnt ausgeführt sind und sich in dieser weiteren Richtung auf die gleiche Größe ansprechende Messspots (1) und zugeordnete Referenzspots (2) nebeneinander erstrecken und gewünschtenfalls nicht gegeneinander versetzt sind.

4. Sensor-Einrichtung nach einem der Ansprüche 1 bis 3, **dadurch gekennzeichnet, dass** die Gruppe von Messspots (1) wenigstens vier, vorzugsweise wenigstens acht, höchstvorzugsweise wenigstens zwölf, noch stärker bevorzugt wenigstens zwanzig Messpots umfasst, die auf die gleiche Größe ansprechen und mit den zugeordneten Referenzspots (2) über den gemeinsamen Anordnungsbereich verteilt sind, so dass bezogen auf die wenigstens eine Richtung derartige Messspots (1) zwischen Referenzspots (2) und Referenzspots (2) zwischen derartigen Messspots (1) angeordnet sind.

5. Sensor-Einrichtung nach einem der Ansprüche 1 bis 4, **dadurch gekennzeichnet, dass** bezogen auf die wenigstens eine Richtung für eine Mehrzahl von auf die gleiche zu messende Größe ansprechende Messspots (1) - vorzugsweise wenigstens vier, höchstvorzugsweise wenigstens acht, stärker bevorzugt wenigstens zwölf, noch stärker bevorzugt wenigstens zwanzig derartige Messspots - und für eine Mehrzahl von zugeordneten Referenzspots (2) - vorzugsweise wenigstens vier, höchstvorzugsweise wenigstens acht, stärker bevorzugt wenigstens zwölf, noch stärker bevorzugt wenigstens zwanzig Referenzspots - einander unmittelbar benachbarte Messspots und Referenzspots einen Abstand von maximal 3000 µm, vorzugsweise einen Abstand von maximal 300 µm, höchstvorzugsweise einen Abstand von maximal 30 µm, stärker bevorzugt einen Abstand von maximal 10 µm aufweisen oder - noch stärker bevorzugt - bei verschwindendem oder nahezu verschwindendem Abstand aneinander angrenzen.

6. Sensor-Einrichtung nach einem der Ansprüche 1 bis 5, **dadurch gekennzeichnet, dass** mehrere erste Gruppen von Sensorspots der Anordnung jeweils als Messspots (1) ausgeführt sind, wobei die Messspots (1) einer Gruppe jeweils auf die oder wenigstens eine gleiche zu messende Größe ansprechen und die Messspots mehrerer unterschiedlicher Gruppen auf verschiedene zu messende Größen ansprechen.

7. Sensor-Einrichtung nach Anspruch 6, **dadurch gekennzeichnet, dass** den Gruppen von Messspots gemeinsam eine zweite Gruppe von Sensorspots der Anordnung zugeordnet ist, die als Referenzspots ausgeführt sind, und dass die Messspots der Gruppen von Messspots und die Referenzspots der Gruppe Referenzspots über einen gemeinsamen Anordnungsbereich verteilt sind.

8. Sensor-Einrichtung nach Anspruch 6, **dadurch gekennzeichnet, dass** jeder Gruppe von Messspots (1) eine eigene zweite Gruppe von Sensorspots der Anordnung zugeordnet ist, die als Referenzspots (2) ausgeführt sind, und dass für jede Gruppe von Messspots (1) und die zugeordnete Gruppe von Referenzspots (2) jeweils ein eigener gemeinsamer Anordnungsbereich vorgesehen ist, über den die Messspots der Gruppe von Messspots und die Referenzspots der zugeordneten Gruppe von Referenzspots verteilt sind und der gegenüber dem oder den gemeinsamen Anordnungsbereichen anderer Gruppen von Mess- und Referenzspots versetzt ist.

9. Sensor-Einrichtung nach Anspruch 8, **dadurch gekennzeichnet, dass** die Messspots (1) jeder Gruppe von Messspots und die Referenzspots (2) der diesen zugeordneten Gruppe von Referenzspots jeweils derart über den jeweiligen gemeinsamen Anordnungsbereich verteilt sind, dass bezogen auf wenigstens eine Richtung die Messspots zwischen Referenzspots und Referenzspots zwischen Messspots angeordnet sind.

10. Sensor-Einrichtung nach Anspruch 9, **dadurch gekennzeichnet, dass** die Messspots (1) jeder Gruppe von Messspots und die Referenzspots (2) der diesen zugeordneten Gruppe von Referenzspots jeweils entsprechend den Angaben wenigstens eines der Ansprüche 1 bis 5 im jeweiligen gemeinsamen Anordnungsbereich angeordnet sind.

11. Sensor-Einrichtung nach einem der Ansprüche 6 bis 10, **dadurch gekennzeichnet, dass** wenigstens vier, vorzugsweise wenigstens acht, höchstvorzugsweise wenigstens zwölf, noch stärker bevorzugt wenigstens zwanzig verschiedene Gruppen von Messspots (1) vorgesehen sind.

12. Sensor-Einrichtung nach einem der Ansprüche 1 bis 11, **dadurch gekennzeichnet, dass** die Sensorspots (1, 2) oder eine Mehrzahl von den Sensorspots auf einer vorzugsweise planen Oberfläche verteilt angeordnet sind und vorzugsweise wenigstens ein einem gemeinsamen Anordnungsbereich entsprechendes zwei-dimensionales Feld von Sensorspots bilden.

13. Sensor-Einrichtung nach Anspruch 12, **dadurch gekennzeichnet, dass** die auf der Oberfläche angeordneten Sensorspots (1, 2) flächig ausgeführt sind.

14. Sensor-Einrichtung nach einem der Ansprüche 1 bis 13, **dadurch gekennzeichnet, dass** die Sensorspots oder eine Mehrzahl von den Sensorspots in einem Volumen verteilt angeordnet ist und vorzugsweise wenigstens ein einem gemeinsamen Anordnungsbereich entsprechendes drei-dimensionales Feld von Sensorspots bilden.

15. Sensor-Einrichtung nach einem der Ansprüche 1 bis 14, **dadurch gekennzeichnet, dass** die Messspots (1) der bzw. einer jeweiligen Gruppe dafür funktionalisiert sind, dass wenigstens ein bestimmtes Molekül oder wenigstens ein Molekül einer bestimmten Gruppe von Molekülen daran anbindet und dass das Messsignal die Anbindung wenigstens eines solchen Moleküls an einem jeweiligen Messspot oder die Menge oder ein eingenommenes Volumen von solchen an einem jeweiligen Messspot angebundenen Molekülen als zu messende Größe repräsentiert.

16. Sensor-Einrichtung nach einem der Ansprüche 1 bis 15, **dadurch gekennzeichnet, dass** die Messspots (1) der bzw. einer jeweiligen Gruppe dafür funktionalisiert sind, dass wenigstens ein bestimmtes biologisches Objekt oder Objektfragment oder wenigstens ein biologisches Objekt oder Objektfragment einer bestimmten Gruppe von biologischen Objekten oder Objektfragmenten daran anbindet und dass das Messsignal die Anbindung wenigstens eines solchen Objekts bzw. Objektfragments an einem jeweiligen Messspott oder die Menge oder ein eingenommenes Volumen von solchen an einem jeweiligen Messspot angebundenen Objekten bzw. Objektfragmenten als zu messende Größe repräsentiert.

17. Sensor-Einrichtung nach einem der Ansprüche 1 bis 16, **dadurch gekennzeichnet, dass** in dem Substrat auf vorzugsweise optischem Wege die Plasmonen-Resonanz, insbesondere eine Oberflächenplasmonen-Resonanz anregbar ist.

18. Sensor-Einrichtung nach einem der Ansprüche 1 bis 17, umfassend die Messanordnung (10, 12, 14, 16, 18, 20, 22, 24, 26) zur Bereitstellung der Mess- und Referenzsignale.

19. Sensor-Einrichtung nach einem der Ansprüche 1 bis 18, **dadurch gekennzeichnet, dass** die Mess- und Referenzsignale auf Grundlage einer optischen oder/und elektrischen Wechselwirkung mit den Sensorspots durch die Messanordnung (10, 12, 14, 16, 18, 20, 22, 24, 26) bereitstellbar sind.

20. Sensor-Einrichtung nach Anspruch 19, **dadurch gekennzeichnet, dass** die Messanordnung (10, 12, 14, 16, 18, 20, 22, 24, 26) dafür ausgeführt ist, optische Signale zu erfassen, die eine optische Wechselwirkung zwischen zugeführter elektromagnetischer Strahlung und den Sensorspots (1, 2) oder/und deren Umgebung oder eine Änderung der optischen Wechselwirkung repräsentieren, und die Wechselwirkung bzw. Änderung der Wechselwirkung repräsentierende elektrische Signale oder digitale Daten bereitzustellen.

21. Sensor-Einrichtung nach Anspruch 20, **dadurch gekennzeichnet, dass** die Messanordnung (10, 12, 14, 16, 18, 20, 22, 24, 26) eine Bilderfassungseinrichtung, vorzugsweise eine CCD- oder CMOS-Kamera (22), oder ein Detektorfeld oder Detektorarray zur Erfassung der optischen Signale umfasst.

22. Sensor-Einrichtung nach einem der Ansprüche 1 bis 21, **dadurch gekennzeichnet, dass** die Messanordnung (10, 12, 14, 16, 18, 20, 22, 24, 26) dafür ausgeführt ist, für die Messspots und Referenzspots individuelle Messsignale bzw. Referenzsignale bereitzustellen.

23. Sensor-Einrichtung nach einem der Ansprüche 1 bis 22, **dadurch gekennzeichnet, dass** sie als Oberflächenplasmonenresonanz-Messeinrichtung ausgeführt ist.

24. Sensor-Einrichtung nach einem der Ansprüche 1 bis 23, **dadurch gekennzeichnet, dass** sie als Chemo- oder Biosensor-Einrichtung ausgeführt ist.

25. Sensor-Einrichtung nach einem der Ansprüche 1 bis 24, **dadurch gekennzeichnet, dass** die Randbedingungsgröße eine Größe aus der Gruppe Temperatur, Druck, Brechungsindex, Konzentration, Dichte und elektrisches Potential ist.

26. Sensor-Einrichtung nach einem der Ansprüche 1 bis 25, **dadurch gekennzeichnet, dass** als Referenzspots dienende, ggf. hierfür funktionalisierte Sensorspots in Bezug auf wenigstens eine andere zu messende Größe als Messspots dienen, insbesondere hierfür funktionalisiert sind.

27. Sensor-Einrichtung nach einem der Ansprüche 1 bis 26, **dadurch gekennzeichnet, dass** als Messspots dienende, insbesondere hierfür funktionalisierte Sensorspots in Bezug auf wenigstens eine andere zu messende Größe als Referenzspots dienen, und ggf. hierfür funktionalisiert sind.

28. Plasmonenresonanz-Sensor-Verfahren, umfassend:
Anordnen von Sensorspots (1, 2) auf oder in einem gemeinsamen Substrat, wobei wenigstens eine erste Gruppe von mehreren Sensorspots der Anordnung als Messspots (1) ausgeführt ist, die auf wenigstens eine zu messende Größe ansprechen und auf deren Grundlage mittels einer Messanordnung wenigstens ein die zu messende Größe oder eine Änderung der zu messenden Größe direkt oder indirekt repräsentierendes Messsignal bereitgestellt wird, und
wenigstens eine zweite Gruppe von mehreren den Messspots (1) zugeordneten Sensorspots (2) der Anordnung als Referenzspots ausgeführt ist, die auf die zu messende Größe nicht oder nur unwesentlich ansprechen und auf deren Grundlage mittels der Messanordnung wenigstens ein Referenzsignal bereitgestellt wird,
wobei in dem Substrat eine Plasmonenresonanz angeregt wird und das Messsignal und das Referenzsignal von der Anregung oder Nicht-Anregung einer Plasmonenresonanz oder von der Wechselwirkung der angeregten Plasmonen mit der Umgebung im Bereich eines jeweiligen Messspots (1) bzw. Referenzspots (2) abhängig sind,
wobei die Referenzspots (2) in Bezug auf die zugeordneten Messspots (1) derart ausgeführt werden, dass die Referenzspots auf wenigstens eine Randbedingungsgröße ansprechen, auf die auch die Messspots (1) ansprechen und die das wenigstens eine Messsignal beeinflusst, so dass das Referenzsignal die Randbedingungsgröße oder eine Änderung der Randbedingungsgröße direkt oder indirekt repräsentiert,
wobei sowohl die Referenzspots (2) als auch die auf die gleiche zu messende Größe ansprechenden Messspots (1) über einen gemeinsamen Anordnungsbereich verteilt werden, so dass bezogen auf wenigstens eine Richtung für eine Mehrzahl dieser Messspots (1) und Referenzspots (2) oder - vorzugsweise - für alle Messspots (1) oder/und alle Referenzspots (2) wenigstens eine der folgenden Anordnungsvorschriften erfüllt ist:
i) bezogen auf die wenigstens eine Richtung sind die Messspots und die zugeordneten Referenzspots derart gegeneinander versetzt angeordnet, dass ein jeweiliger Messspot (1) zwischen zwei unmittelbar benachbarten Referenzspots (2) angeordnet ist;
ii) bezogen auf die wenigstens eine Richtung sind die Messspots und die zugeordneten Referenzspots derart gegeneinander versetzt angeordnet, dass ein jeweiliger Referenzspot (2) zwischen zwei unmittelbar benachbarten Messspots (1) angeordnet ist,
wobei die Gruppe von Messspots (1) wenigstens vier, vorzugsweise wenigstens acht, höchstvorzugsweise wenigstens zwölf, noch stärker bevorzugt wenigstens zwanzig Messspots umfasst, die auf die gleiche Größe ansprechen und mit den zugeordneten Referenzspots (2) über den gemeinsamen Anordnungsbereich verteilt sind,
wobei in der Messanordnung (10, 12, 14, 16, 18, 20, 22, 24, 26) oder/und einer dieser zugeordneten Auswerteanordnung (28) individuelle Messsignale von den auf die gleiche zu messende Größe ansprechenden Messspots (1) und individuelle Referenzsignale von den den Messspots zugeordneten Referenzspots (2) oder hieraus erhaltene Folgesignale oder Folgedaten zu summarischen oder mittleren Mess- und Referenzsignalen bzw. Mess- und Referenzfolgesignalen bzw. Mess- und Referenzfolgedaten entsprechenden Kombinationssignalen bzw. Kombinationsfolgesignalen bzw. Kombinationsfolgedaten kombiniert werden und Differenzen oder Verhältnisse zwischen den gegebenenfalls normierten Messkombinationssignalen bzw. Messkombinationsfolgesignalen bzw. Messkombinationsfolgedaten einerseits und den gegebenenfalls normierten Referenzkombinationssignalen bzw. Referenzkombinationsfolgesignalen bzw. Referenzkombinationsfolgedaten anderseits gebildet werden, um Informationen über die zu messende Größe oder deren Änderung zu erhalten.

## Claims

1. A plasmon resonance sensor means comprising at least an arrangement of sensor spots (1, 2) which are arranged on or in a common substrate or held by a common substrate, wherein at least a first group of a plurality of sensor spots of the arrangement is configured as measurement spots (1) which respond to at least one variable to be measured and based on which at least one measuring signal directly or indirectly representing the variable to be measured or a change in the variable to be measured can be provided by means of a measuring assembly, and at least a second group of a plurality of sensor spots (2), which are associated with the measurement spots (1), of the arrangement is configured as reference spots which do not respond or respond only insignificantly to the variable to be measured and based on which at least one reference signal can be provided by means of the measuring assembly, wherein a plasmon resonance can be excited in the substrate and the measuring signal and the reference signal are dependent on the excitation or non-excitation of a plasmon resonance or on the interaction of the excited plasmon with the environment in the region of a respective measurement spot (1) or reference spot (2), the reference spots (2) being configured relative to the associated measurement spots (1) in such a way that the reference spots respond to at least one boundary condition variable to which the measurement spots (1) also respond and which influences the at least one measuring signal such that the reference signal directly or indirectly represents the boundary condition variable or a change in the boundary condition variable, wherein both the reference spots (2) and the measurement spots (1) responding to the same variable to be measured are distributed over a common arrangement region such that relative to at least one direction for a plurality of said measurement spots (1) and reference spots (2) or - preferably - for all measurement spots (1) and/or all reference spots (2) at least one of the following arrangement provisions is met:
i) relative to the at least one direction the measurement spots and the associated reference spots are arranged offset from one another in such a way that a respective measurement spot (1) is arranged between two immediately adjacent reference spots (2);
ii) relative to the at least one direction the measurement spots and the associated reference spots are arranged offset from one another in such a way that a respective reference spot (2) is arranged between two immediately adjacent measurement spots (1),
wherein the group of measurement spots (1) comprises at least four, preferably at least eight, most preferably at least twelve, more preferably still at least twenty measurement spots which respond to the same variable and are distributed with the associated reference spots (2) over the common arrangement region, wherein the measuring assembly (10, 12, 14, 16, 18, 20, 22, 24, 26) and/or an evaluation assembly (28) associated therewith is configured to combine individual measuring signals of the measurement spots (1) responding to the same variable to be measured and individual reference signals of the reference spots (2) associated with the measurement spots or sequence signals or sequence data obtained therefrom to form combination signals or combination sequence signals or combination sequence data corresponding to summary or average measuring and reference signals or measuring and reference sequence signals or measuring and reference sequence data and to form differences or ratios between the optionally standardized measuring combination signals or measuring combination sequence signals or measuring combination sequence data, on the one hand, and the optionally standardized reference combination signals or reference combination sequence signals or reference combination sequence data, on the other hand, in order to obtain information about the variable to be measured or the change therein.

2. The sensor means as claimed in claim 1, wherein the spots are arranged in a distributed manner such that relative to at least one further direction measurement spots responding to the same variable to be measured are arranged between associated reference spots and reference spots are arranged between associated measurement spots responding to the same variable.

3. The sensor means as claimed in claim 1, wherein the sensor spots (1, 2) are configured so as to be extended relative to a further direction and in this further direction measurement spots (1) responding to the same variable and associated reference spots (2) extend next to one another and if appropriate are not offset from one another.

4. The sensor means as claimed in any one of claims 1 to 3, wherein the group of measurement spots (1) comprises at least four, preferably at least eight, most preferably at least twelve, more preferably still at least twenty measurement spots which respond to the same variable and are distributed with the associated reference spots (2) over the common arrangement region such that such measurement spots (1) are arranged between reference spots (2) and reference spots (2) are arranged between such measurement spots (1) relative to the at least one direction.

5. The sensor means as claimed in any one of claims 1 to 4, wherein relative to the at least one direction for a plurality of measurement spots (1) responding to the same variable to be measured - preferably at least four, most preferably at least eight, more preferably at least twelve, more preferably still at least twenty such measurement spots - and for a plurality of associated reference spots (2) - preferably at least four, most preferably at least eight, more preferably at least twelve, more preferably still at least twenty reference spots - of measurement spots and reference spots which are immediately adjacent to one another have a spacing of at most 3,000 µm, preferably a spacing of at most 300 µm, most preferably a spacing of at most 30 µm, more preferably a spacing of at most 10 µm or - more preferably still - abut one another with an imperceptible or almost imperceptible spacing.

6. The sensor means as claimed in any one of claims 1 to 5, wherein a plurality of first groups of sensor spots of the arrangement are each configured as measurement spots (1), the measurement spots (1) of a group each responding to the or at least one same variable to be measured and the measurement spots of a plurality of different groups responding to various variables to be measured.

7. The sensor means as claimed in claim 6, wherein a second group of sensor spots of the arrangement, which are configured as reference spots, is jointly associated with the groups of measurement spots and wherein the measurement spots of the groups of measurement spots and the reference spots of the group of reference spots are distributed over a common arrangement region.

8. The sensor means as claimed in the claim 6, wherein each group of measurement spots (1) has associated with it its own second group of sensor spots of the arrangement, which are configured as reference spots (2) and wherein for each group of measurement spots (1) and the associated group of reference spots (2) its respective own common arrangement region is provided, over which the measurement spots of the group of measurement spots and the reference spots of the associated group of reference spots are distributed and which is offset from the common arrangement region or regions of other groups of measurement and reference spots.

9. The sensor means as claimed in claims 8, wherein the measurement spots (1) of each group of measurement spots and the reference spots (2) of the group associated therewith of reference spots are each distributed over the respective common arrangement region in such a way that relative to at least one direction the measurement spots are arranged between reference spots and reference spots are arranged between measurement spots.

10. The sensor means as claimed in claim 9, wherein the measurement spots (1) of each group of measurement spots and the reference spots (2) of the group associated therewith of reference spots are each arranged in the respective common arrangement region as specified in at least one of claims 1 to 5.

11. The sensor means as claimed in any one of claims 6 to 10, wherein at least four, preferably at least eight, most preferably at least twelve, more preferably still at least twenty different groups of measurement spots (1) are provided.

12. The sensor means as claimed in any one of claims 1 to 11, wherein the sensor spots (1, 2) or a plurality of the sensor spots are arranged distributed on a preferably planar surface and preferably form at least one two-dimensional field of sensor spots that corresponds to a common arrangement region.

13. The sensor means as claimed in claim 12, wherein the sensor spots (1, 2) arranged on the surface are sheet-like in their configuration.

14. The sensor means as claimed in any one of claims 1 to 13, wherein the sensor spots or a plurality of the sensor spots are arranged distributed in a volume and preferably form at least one three-dimensional field of sensor spots that corresponds to a common arrangement region.

15. The sensor means as claimed in any one of claims 1 to 14, wherein the measurement spots (1) of the or each group are functionalized for at least one specific molecule or at least one molecule of a specific group of molecules to bind thereto and wherein the measuring signal represents the binding of at least one such molecule to a respective measurement spot or the amount of or a volume taken up by such molecules bound to a respective measurement spot as a variable to be measured.

16. The sensor means as claimed in any one of claims 1 to 15, wherein the measurement spots (1) of the or each group are functionalized for at least one specific biological object or object fragment or at least one biological object or object fragment of a specific group of biological objects or object fragments to bind thereto and wherein the measuring signal represents the binding of at least one such object or object fragment to a respective measurement spot or the amount of or a volume taken up by such objects or object fragments bound to a respective measurement spot as a variable to be measured.

17. The sensor means as claimed in any one of claims 1 to 16, wherein the plasmon resonance, in particular a surface plasmon resonance, can be excited in the substrate by preferably optical means.

18. The sensor means as claimed in any one of claims 1 to 17, comprising the measuring assembly (10, 12, 14, 16, 18, 20, 22, 24, 26) for providing the measuring and reference signals.

19. The sensor means as claimed in any one of claims 1 to 18, wherein the measuring and reference signals can be provided by the measuring assembly (10, 12, 14, 16, 18, 20, 22, 24, 26) based on optical and/or electrical interaction with the sensor spots.

20. The sensor means as claimed in claim 19, wherein the measuring assembly (10, 12, 14, 16, 18, 20, 22, 24, 26) is configured to detect optical signals representing optical interaction between supplied electromagnetic radiation and the sensor spots (1, 2) and/or the environment thereof or a change in the optical interaction and to provide electrical signals or digital data representing the interaction or change in the interaction.

21. The sensor means as claimed in claim 20, wherein the measuring assembly (10, 12, 14, 16, 18, 20, 22, 24, 26) comprises an image detection means, preferably a CCD or CMOS camera (22), or a detector field or detector array for detecting the optical signals.

22. The sensor means as claimed in any one of claims 1 to 21, wherein the measuring assembly (10, 12, 14, 16, 18, 20, 22, 24, 26) is configured to provide individual measuring signals or reference signals for the measurement spots and reference spots.

23. The sensor means as claimed in any one of claims 1 to 22, wherein it is configured as a surface plasmon resonance measuring means.

24. The sensor means as claimed in any one of claims 1 to 23, wherein it is configured as a chemosensor or biosensor means.

25. The sensor means as claimed in any one of claims 1 to 24, wherein the boundary condition variable is a variable from the group consisting of temperature, pressure, index of refraction, concentration, density and electrical potential.

26. The sensor means as claimed in any one of claims 1 to 25, wherein sensor spots which serve as reference spots and are optionally functionalized for this purpose serve as measurement spots, in particular are functionalized for this purpose, relative to at least one other variable to be measured.

27. The sensor means as claimed in any one of claims 1 to 26, wherein sensor spots which serve as measurement spots and in particular are functionalized for this purpose serve as reference spots, and optionally are functionalized for this purpose, relative to at least one other variable to be measured.

28. A plasmon resonance sensor method comprising:
arranging sensor spots (1, 2) on or in a common substrate, wherein at least a first group of a plurality of sensor spots of the arrangement is configured as measurement spots (1) which respond to at least one variable to be measured and based on which at least one measuring signal directly or indirectly representing the variable to be measured or a change in the variable to be measured is provided by means of a measuring assembly, and at least a second group of a plurality of sensor spots (2), which are associated with the measurement spots (1), of the arrangement is configured as reference spots which do not respond or respond only insignificantly to the variable to be measured and based on which at least one reference signal is provided by means of the measuring assembly, wherein a plasmon resonance is excited in the substrate and the measuring signal and the reference signal are dependent on the excitation or non-excitation of a plasmon resonance or on the interaction of the excited plasmon with the environment in the region of a respective measurement spot (1) or reference spot (2), the reference spots (2) being configured relative to the associated measurement spots (1) in such a way that the reference spots respond to at least one boundary condition variable to which the measurement spots (1) also respond and which influences the at least one measuring signal such that the reference signal directly or indirectly represents the boundary condition variable or a change in the boundary condition variable, wherein both the reference spots (2) and the measurement spots (1) responding to the same variable to be measured are distributed over a common arrangement region such that relative to at least one direction for a plurality of said measurement spots (1) and reference spots (2) or - preferably - for all measurement spots (1) and/or all reference spots (2) at least one of the following arrangement provisions is met:
i) relative to the at least one direction the measurement spots and the associated reference spots are arranged offset from one another in such a way that a respective measurement spot (1) is arranged between two immediately adjacent reference spots (2);
ii) relative to the at least one direction the measurement spots and the associated reference spots are arranged offset from one another in such a way that a respective reference spot (2) is arranged between two immediately adjacent measurement spots (1),
wherein the group of measurement spots (1) comprises at least four, preferably at least eight, most preferably at least twelve, more preferably still at least twenty measurement spots which respond to the same variable and are distributed with the associated reference spots (2) over the common arrangement region,
wherein
individual measuring signals of the measurement spots (1) responding to the same variable to be measured and individual reference signals of the reference spots (2) associated with the measurement spots or sequence signals or sequence data obtained therefrom are combined in the measuring assembly (10, 12, 14, 16, 18, 20, 22, 24, 26) and/or an evaluation assembly (28) associated therewith to form combination signals or combination sequence signals or combination sequence data corresponding to summary or average measuring and reference signals or measuring and reference sequence signals or measuring and reference sequence data, and differences or ratios between the optionally standardized measuring combination signals or measuring combination sequence signals or measuring combination sequence data, on the one hand, and the optionally standardized reference combination signals or reference combination sequence signals or reference combination sequence data, on the other hand, are formed in order to obtain information about the variable to be measured or the change therein.

## Revendications

1. Dispositif formant capteur par résonance plasmonique, comprenant au moins un agencement de spots de détection (1, 2) disposés sur ou dans un substrat commun ou supportés par un substrat commun, au moins un premier groupe de plusieurs spots de détection de l'agencement étant réalisé comme des spots de mesure (1) qui répondent à au moins une grandeur à mesurer et sur la base desquels, au moyen d'un ensemble de mesure, au moins un signal de mesure représentant directement ou indirectement la grandeur à mesurer ou une modification de la grandeur à mesurer peut être fourni, et au moins un deuxième groupe de plusieurs spots de détection (2) de l'agencement, associés aux spots de mesure (1), étant réalisé comme des spots de référence qui ne répondent pas ou de façon insignifiante seulement à la grandeur à mesurer et sur la base desquels, au moyen de l'ensemble de mesure, au moins un signal de référence peut être fourni,
dans lequel, dans le substrat, une résonance plasmonique peut être excitée et le signal de mesure et le signal de référence dépendent de l'excitation ou de la non-excitation d'une résonance plasmonique ou de interaction des plasmons excités avec l'environnement dans la zone d'un spot de mesure (1) ou d'un spot de référence (2) respectif,
dans lequel les spots de référence (2) sont réalisés par rapport aux spots de mesure (1) associés de telle sorte que les spots de référence répondent à au moins une grandeur de conditions aux limites, à laquelle répondent également les spots de mesure (1) et qui affecte ledit au moins un signal de mesure, de sorte que le signal de référence représente directement ou indirectement la grandeur de conditions aux limites ou une modification de la grandeur de conditions aux limites,
dans lequel aussi bien les spots de référence (2) que les spots de mesure (1) répondant à la même grandeur à mesurer sont répartis sur une zone d'agencement commune, de sorte que par rapport à au moins une direction pour une pluralité de ces spots de mesure (1) et spots de référence (2) ou - de préférence - pour tous les spots de mesure (1) ou/et tous les spots de référence (2) au moins l'une des spécifications d'agencement suivantes est satisfaite :
i) par rapport à ladite au moins une direction, les spots de mesure et les spots de référence associés sont agencés de façon décalée les uns par rapport aux autres de telle sorte qu'un spot de mesure (1) respectif est agencé entre deux spots de référence (2) immédiatement adjacents ;
ii) par rapport à ladite au moins une direction, les spots de mesure et les spots de référence associés sont agencés de façon décalée les uns par rapport aux autres de telle sorte qu'un spot de référence (2) respectif est agencé entre deux spots de mesure (1) immédiatement adjacents,
dans lequel le groupe de spots de mesure (1) comprend au moins quatre, de préférence au moins huit, de plus grande préférence au moins douze, de plus grande préférence encore au moins vingt spots de mesure qui répondent à la même grandeur et sont répartis avec les spots de référence (2) associés sur la zone d'agencement commune,
dans lequel l'ensemble de mesure (10, 12, 14, 16, 18, 20, 22, 24, 26) ou/et un ensemble d'évaluation (28) qui lui est associé est/sont réalisé(s) pour combiner des signaux de mesure individuels provenant des spots de mesure (1) répondant à la même grandeur à mesurer et des signaux de référence individuels provenant des spots de référence (2) associés aux spots de mesure, ou bien des signaux séquentiels ou des données séquentielles obtenus à partir de ceux-ci, en signaux de mesure et de référence sommaires ou moyens, ou en signaux séquentiels de mesure et de référence, ou en signaux combinés ou signaux séquentiels combinés ou données séquentielles combinées correspondant à des données séquentielles de mesure et de référence, et pour établir des différences ou relations entre les signaux combinés de mesure ou les signaux séquentiels combinés de mesure ou les données séquentielles combinées de mesure éventuellement normalisés d'une part, et les signaux combinés de référence ou les signaux séquentiels combinés de référence ou les données séquentielles combinées de référence éventuellement normalisés d'autre part, afin d'obtenir des informations concernant la grandeur à mesurer ou sa modification.

2. Dispositif formant capteur selon la revendication 1, **caractérisé en ce que** les spots de détection sont agencés de façon répartie de telle sorte que par rapport à au moins une autre direction, des spots de mesure répondant à la même grandeur à mesurer sont agencés entre des spots de référence associés, et des spots de référence sont agencés entre des spots de mesure associés répondant à la même grandeur.

3. Dispositif formant capteur selon la revendication 1, **caractérisé en ce que** les spots de détection (1, 2), par rapport à une autre direction, sont réalisés de façon étendue et des spots de mesure (1) répondant à la même grandeur et des spots de référence (2) associés s'étendent côte à côte dans cette autre direction et ne sont pas décalés les uns par rapport aux autres, si souhaité.

4. Dispositif formant capteur selon l'une quelconque des revendications 1 à 3, **caractérisé en ce que** le groupe de spots de mesure (1) comprend au moins quatre, de préférence au moins huit, de plus grande préférence au moins douze, de plus grande préférence encore au moins vingt spots de mesure qui répondent à la même grandeur et sont répartis avec les spots de référence (2) associés sur la zone d'agencement commune, de sorte que par rapport à ladite au moins une direction, de tels spots de mesure (1) sont agencés entre des spots de référence (2), et les spots de référence (2) sont agencés entre de tels spots de mesure (1).

5. Dispositif formant capteur selon l'une quelconque des revendications 1 à 4, **caractérisé en ce que** par rapport à ladite au moins une direction, pour une pluralité de spots de mesure (1) répondant à la même grandeur à mesurer - de préférence au moins quatre, de plus grande préférence au moins huit, de plus grande préférence encore au moins douze, de plus grande préférence encore au moins vingt de ces spots de mesure - et pour une pluralité de spots de référence (2) associés - de préférence au moins quatre, de plus grande préférence au moins huit, de plus grande préférence encore au moins douze, de plus grande préférence encore au moins vingt spots de référence - des spots de mesure et spots de référence immédiatement voisins présentent un espacement d'un maximum de 3000 µm, de préférence un espacement d'un maximum de 300 µm, de plus grande préférence un espacement d'un maximum de 30 µm, de plus grande préférence encore un espacement d'un maximum de 10 µm, ou bien - de plus grande préférence encore - sont adjacents les uns aux autres avec un espacement négligeable ou quasi négligeable.

6. Dispositif formant capteur selon l'une quelconque des revendications 1 à 5, **caractérisé en ce que** plusieurs premiers groupes de spots de détection de l'agencement sont réalisés respectivement comme des spots de mesure (1), dans lequel les spots de mesure (1) d'un groupe répondent respectivement à la, ou du moins à une même grandeur à mesurer et les spots de mesure de plusieurs groupes différents répondent à différentes grandeurs à mesurer.

7. Dispositif formant capteur selon la revendication 6, **caractérisé en ce que** les groupes de spots de mesure se voient associer en commun un deuxième groupe de spots de détection de l'agencement qui sont réalisés comme des spots de référence, et **en ce que** les spots de mesure des groupes de spots de mesure et les spots de référence du groupe de spots de référence sont répartis sur une zone d'agencement commune.

8. Dispositif formant capteur selon la revendication 6, **caractérisé en ce que** chaque groupe de spots de mesure (1) se voit associer son propre deuxième groupe de spots de détection de l'agencement qui sont réalisés comme des spots de référence (2), et **en ce que** pour chaque groupe de spots de mesure (1) et le groupe de spots de référence (2) associé, respectivement une zone d'agencement commune propre est prévue, à travers laquelle sont répartis les spots de mesure du groupe de spots de mesure et les spots de référence du groupe de spots de référence associé, et qui est décalée par rapport à la ou les zone(s) d'agencement commune(s) des autres groupes de spots de mesure et de référence.

9. Dispositif formant capteur selon la revendication 8, **caractérisé en ce que** les spots de mesure (1) de chaque groupe de spots de mesure et les spots de référence (2) du groupe de spots de référence qui leur est associé, sont respectivement répartis de telle sorte à travers la zone d'agencement commune que par rapport à au moins une direction, les spots de mesure sont agencés entre des spots de référence et les spots de référence sont agencés entre des spots de mesure.

10. Dispositif formant capteur selon la revendication 9, **caractérisé en ce que** les spots de mesure (1) de chaque groupe de spots de mesure et les spots de référence (2) du groupe de spots de référence qui leur est associé sont agencés respectivement selon les indications d'au moins l'une des revendications 1 à 5 dans la zone d'agencement commune respective.

11. Dispositif formant capteur selon l'une quelconque des revendications 6 à 10, **caractérisé en ce qu'**au moins quatre, de préférence au moins huit, de plus grande préférence au moins douze, de plus grande préférence encore au moins vingt groupes différents de spots de mesure (1) sont prévus.

12. Dispositif formant capteur selon l'une quelconque des revendications 1 à 11, **caractérisé en ce que** les spots de détection (1, 2), ou une pluralité des spots de détection, sont agencés de façon répartie sur une surface de préférence plane, et forment de préférence au moins un champ bidimensionnel de spots de détection correspondant à une zone d'agencement commune.

13. Dispositif formant capteur selon la revendication 12, **caractérisé en ce que** les spots de détection (1, 2) agencés sur la surface sont réalisés en nappe.

14. Dispositif formant capteur selon l'une quelconque des revendications 1 à 13, **caractérisé en ce que** les spots de détection, ou une pluralité de spots de détection, sont agencés de façon répartie dans un volume et forment de préférence au moins un champ tridimensionnel de spots de détection correspondant à une zone d'agencement commune.

15. Dispositif formant capteur selon l'une quelconque des revendications 1 à 14, **caractérisé en ce que** les spots de mesure (1) dudit ou d'un groupe respectif sont fonctionnalisés pour qu'au moins une certaine molécule ou au moins une molécule d'un certain groupe de molécules s'y fixe, et **en ce que** le signal de mesure représente en tant que grandeur à mesurer la fixation d'au moins une dite molécule à un spot de mesure respectif ou la quantité ou un volume occupé desdites molécules fixées à un spot de mesure respectif.

16. Dispositif formant capteur selon l'une quelconque des revendications 1 à 15, **caractérisé en ce que** les spots de mesure (1) dudit ou d'un groupe respectif sont fonctionnalisés pour qu'au moins un certain objet ou fragment d'objet biologique ou au moins un objet ou fragment d'objet biologique d'un certain groupe d'objets ou de fragments d'objets biologiques s'y fixe, et **en ce que** le signal de mesure représente en tant que grandeur à mesurer la fixation d'au moins un dit objet ou fragment objet à un spot de mesure respectif ou la quantité ou un volume occupé desdits objets ou fragments d'objet fixés à un spot de mesure respectif.

17. Dispositif formant capteur selon l'une quelconque des revendications 1 à 16, **caractérisé en ce que** dans le substrat, de préférence de façon optique, la résonance plasmonique, en particulier une résonance plasmonique de surface, peut être excitée.

18. Dispositif formant capteur selon l'une quelconque des revendications 1 à 17, comprenant l'ensemble de mesure (10, 12, 14, 16, 18, 20, 22, 24, 26) pour fournir les signaux de mesure et de référence.

19. Dispositif formant capteur selon l'une quelconque des revendications 1 à 18, **caractérisé en ce que** les signaux de mesure et de référence peuvent être fournis par l'ensemble de mesure (10, 12, 14, 16, 18, 20, 22, 24, 26) sur la base d'une interaction optique ou/et électrique avec les spots de détection.

20. Dispositif formant capteur selon la revendication 19, **caractérisé en ce que** l'ensemble de mesure (10, 12, 14, 16, 18, 20, 22, 24, 26) est réalisé pour détecter des signaux optiques qui représentent une interaction optique entre un rayonnement électromagnétique amené et les spots de détection (1, 2) ou/et leur environnement ou une modification de l'interaction optique, et pour fournir des signaux électriques ou des données numériques représentant l'interaction ou la modification de l'interaction.

21. Dispositif formant capteur selon la revendication 20, **caractérisé en ce que** l'ensemble de mesure (10, 12, 14, 16, 18, 20, 22, 24, 26) comprend un dispositif de prise de vue, de préférence une caméra CCD ou CMOS (22), ou un champ de détecteurs ou réseau de détecteurs, pour détecter des signaux optiques.

22. Dispositif formant capteur selon l'une quelconque des revendications 1 à 21, **caractérisé en ce que** l'ensemble de mesure (10, 12, 14, 16, 18, 20, 22, 24, 26) est réalisé pour fournir pour les spots de mesure et les spots de référence des signaux de mesure ou signaux de référence individuels.

23. Dispositif formant capteur selon l'une quelconque des revendications 1 à 22, **caractérisé en ce qu'**il est réalisé comme un dispositif de mesure par résonance plasmonique de surface.

24. Dispositif formant capteur selon l'une quelconque des revendications 1 à 23, **caractérisé en ce qu'**il est réalisé comme un dispositif formant chimiocapteur ou biocapteur.

25. Dispositif formant capteur selon l'une quelconque des revendications 1 à 24, **caractérisé en ce que** la grandeur de conditions aux limites est une grandeur issue du groupe comprenant la température, la pression, l'indice de réfraction, la concentration, la densité et le potentiel électrique.

26. Dispositif formant capteur selon l'une quelconque des revendications 1 à 25, **caractérisé en ce que** des spots de détection servant de spots de référence, le cas échéant fonctionnalisés à cet effet, servent par rapport à au moins une autre grandeur à mesurer de spots de mesure, en particulier en étant fonctionnalisés à cet effet.

27. Dispositif formant capteur selon l'une quelconque des revendications 1 à 26, **caractérisé en ce que** des spots de détection servant de spots de mesure, le cas échéant fonctionnalisés à cet effet, servent par rapport à au moins une autre grandeur à mesurer de spots de référence, en particulier en étant fonctionnalisés à cet effet.

28. Procédé à capteur par résonance plasmonique, comprenant les étapes consistant à :
agencer des spots de détection (1, 2) sur ou dans un Substrat commun, dans lequel au moins un premier groupe de plusieurs spots de détection de l'agencement est réalisé comme des spots de mesure (1) qui répondent à au moins une grandeur à mesurer et sur la base desquels, au moyen d'un ensemble de mesure, au moins un signal de mesure représentant directement ou indirectement la grandeur à mesurer ou une modification de la grandeur à mesurer est fourni, et au moins un deuxième groupe de plusieurs spots de détection (2) de l'agencement, associés aux spots de mesure (1), est réalisé comme des spots de référence qui ne répondent pas ou de façon insignifiante seulement à la grandeur à mesurer et sur la base desquels, au moyen de l'ensemble de mesure, au moins un signal de référence est fourni,
dans lequel, dans le substrat, une résonance plasmonique est excitée et le signal de mesure et le signal de référence dépend de l'excitation ou de la non-excitation d'une résonance plasmonique ou de l'interaction des plasmons excités avec l'environnement dans la zone d'un spot de mesure (1) ou d'un spot de référence (2) respectif,
dans lequel les spots de référence (2), par rapport aux spots de mesure (1) associés, sont réalisés de telle sorte que les spots de référence répondent à au moins une grandeur de conditions aux limites, à laquelle les spots de mesure (1) répondent également et qui affecte ledit au moins un signal de mesure de telle sorte que le signal de référence représente directement ou indirectement la grandeur de conditions aux limites ou une modification de la grandeur de conditions aux limites,
dans lequel aussi bien les spots de référence (2) que les spots de mesure (1) répondant à la même grandeur à mesurer sont répartis à travers une zone d'agencement commune, de sorte que par rapport à au moins une direction pour une pluralité de ces spots de mesure (1) et spots de référence (2) ou - de préférence - pour tous les spots de mesure (1) ou/et tous les spots de référence (2) au moins l'une des spécifications d'agencement suivantes est satisfaite :
i) par rapport à ladite au moins une direction, les spots de mesure et les spots de référence associés sont agencés de façon décalée les uns par rapport aux autres de telle sorte qu'un spot de mesure (1) respectif est agencé entre deux spots de référence (2) immédiatement adjacents ;
ii) par rapport à ladite au moins une direction, les spots de mesure et les spots de référence associés sont agencés de façon décalée les uns par rapport aux autres de telle sorte qu'un spot de référence (2) respectif est agencé entre deux spots de mesure (1) immédiatement adjacents,
dans lequel le groupe de spots de mesure (1) comprend au moins quatre, de préférence au moins huit, de plus grande préférence au moins douze, de plus grande préférence encore au moins vingt spots de mesure qui répondent à la même grandeur et sont répartis avec les spots de référence (2) associés sur la zone d'agencement commune,
dans lequel dans l'ensemble de mesure (10, 12, 14, 16, 18, 20, 22, 24, 26) ou/et un ensemble d'évaluation (28) qui lui est associé, des signaux de mesure individuels provenant des spots de mesure (1) répondant à la même grandeur à mesurer et des signaux de référence individuels provenant des spots de référence (2) associés aux spots de mesure, ou bien des signaux séquentiels ou des données séquentielles obtenus à partir de ceux-ci, sont combinés en signaux de mesure et de référence sommaires ou moyens, ou en signaux séquentiels de mesure et de référence, ou en signaux combinés ou signaux séquentiels combinés ou données séquentielles combinées correspondant à des données séquentielles de mesure et de référence, et des différences ou relations entre les signaux combinés de mesure ou les signaux séquentiels combinés de mesure ou les données séquentielles combinées de mesure éventuellement normalisés d'une part, et les signaux combinés de référence ou les signaux séquentiels combinés de référence ou les données séquentielles combinées de référence éventuellement normalisés d'autre part, sont établies afin d'obtenir des informations concernant la grandeur à mesurer ou sa modification.
